# EUROPEAN PATENT SPECIFICATION

(11) **EP 3 054 709 B1**
(45) Date of publication and mention of the grant of the patent: **29.11.2017**
(21) Application number: 16154335.0
(22) Date of filing: 04.02.2016
(51) Int. Cl.: H04W 4/00, H04W 84/00, H04L 12/28, H04W 4/02

(54) **ELECTRONIC APPARATUS AND SHORT-RANGE COMMUNICATION METHOD THEREOF**
VERFAHREN UND VORRICHTUNG ZUR HERSTELLUNG EINER KURZSTRECKENKOMMUNIKATION
PROCÉDÉ ET APPAREIL PERMETTANT D'ÉTABLIR UNE COMMUNICATION À COURTE PORTÉE

(30) Priority: 06.02.2015 KR 20150018726
(43) Date of publication of application: 10.08.2016
(73) Proprietor: Samsung Electronics Co., Ltd., Gyeonggi-do 16677 (KR)
(72) Inventor: KIM, Gi-Beom, Gyeonggi-do 16677 (KR); KANG, Hyuk, Gyeonggi-do 16677 (KR); KWON, Jun-Sik, Gyeonggi-do 16677 (KR); PARK, Jin-Hyun, Gyeonggi-do 16677 (KR); PARK, Chun-Ho, Gyeonggi-do 16677 (KR); LIM, Jun-Hak, Gyeonggi-do 16677 (KR); CHUNG, Young-Kwan, Gyeonggi-do 16677 (KR)
(74) Representative: HGF Limited

(56) References cited:
- WO-A1-2012/075328
- US-A1- 2014 143 060
- US-A1- 2014 376 511

## Description

### TECHNICAL FIELD

The present disclosure relates to an electronic apparatus and a short-range communication method thereof.

### BACKGROUND

An electronic apparatus may communicate with other electronic apparatuses located near the electronic apparatus. In order to perform short-range communication, each electronic apparatus may perform an operation of sensing a signal (e.g., a beacon signal) transmitted by at least one electronic apparatus. When the electronic apparatus senses the beacon signal, the electronic apparatus may send, to a server, a request for a service related to the beacon signal. In response to the request, the electronic apparatus may receive the service related to the beacon signal from the server.

The above information is presented as background information only to assist with an understanding of the present disclosure. No determination has been made, and no assertion is made, as to whether any of the above might be applicable as prior art with regard to the present disclosure.

WO-2012/075328-A1 discloses methods and apparatuses for causing active hand-in of a device from a macrocell base station to a femto mode.

US-2014/0376511-A1 discloses methods for transporting a media call between an IMS server and a UE and of handing over the media call between a cellular network and a WLAN.

US-2014/143060-A1 discloses interactive advertising using proximity events.

### SUMMARY

When an electronic apparatus connected to various electronic apparatuses through short-range communication requests a service related to a beacon signal, the request for the service may include information on the electronic apparatus that requests the service.

Certain embodiments of the present disclosure are to address at least the above-mentioned problems and/or disadvantages and to provide at least the advantages described below. Accordingly an aspect of the present disclosure is to provide an electronic apparatus to request the service, the request may be transmitted in a state of including not only the information on the electronic apparatus, that requests the service, but also information on the various neighboring apparatuses connected to the electronic apparatus. The electronic apparatus may provide various services on the basis of the information on the various neighboring apparatuses.

In accordance with a first aspect of the present invention, a method for short-range communication in an electronic apparatus is provided. The method comprises: receiving display information of at least one neighboring apparatus related to the electronic apparatus, wherein the display information includes a size or a resolution of a display in a first neighboring apparatus; receiving a beacon signal from at least one beacon apparatus; transmitting, to a server, a request message for a service, wherein the request message includes information related to the beacon signal and the display information; receiving, from the server, a service including displaying a screen of which a size or a resolution is processed based on the display information incldued in the request message; and controlling the first neighboring apparatus to display the screen based on the received service.

In accordance with a second aspect of the present invention, an electronic apparatus is provided. The electronic apparatus comprises: a communication module configured to receive display information on at least one neighboring apparatus related to the electronic apparatus, wherein the display information includes a size or a resolution of a display in a first neighboring apparatus; and a processor configured to: control the communication module to receive a beacon signal from at least one beacone apparatus through the communication module; control the communication module to transmit, to a server, a request message for a service, wherein the request message includes information related to the beacon signal and the display information; control the communication module to receive, from the server, a service including displaying a screen of which a size or resolution is processed based on the display information included in the request message; and control the first neighboring apparatus to display the screen based on the received service.

Also disclosed is an electronic apparatus. The electronic apparatus includes a communication interface configured to receive information on at least one neighboring apparatus related to the electronic apparatus, and a processor configured to control a service related to a beacon signal based on the information on the at least one neighboring apparatus when the beacon signal is received from at least one beacon apparatus through the communication interface.

Also disclosed is a method for short-range communication in an electronic apparatus. The method includes receiving information on at least one neighboring apparatus related to the electronic apparatus, receiving a beacon signal from at least one beacon apparatus, and controlling a service related to the beacon signal based on the information on the at least one neighboring apparatus.

In the electronic apparatus and the short-range communication method thereof, according to various embodiments of the present disclosure, the electronic apparatus can request a service in a state of including information of the neighboring apparatus, and thereby, a user can receive a service which is optimized for the electronic apparatus or the neighboring apparatus.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating an example of a network environment according to various embodiments of the present disclosure;
FIG. 2 is a block diagram illustrating an example of a network environment according to various embodiments of the present disclosure;
FIG. 3 is a flowchart illustrating an example of an operation flow of an electronic apparatus according to various embodiments of the present disclosure;
FIG. 4 is a flowchart illustrating an example of an operation flow of an electronic apparatus according to various embodiments of the present disclosure;
FIG. 5 is a signal flow diagram illustrating an example of a service providing operation flow among a server, an electronic apparatus, and a neighboring apparatus according to various embodiments of the present disclosure;
FIG. 6 is a view illustrating an example of a situation in which a service is provided among a server, an electronic apparatus, and a neighboring apparatus according to various embodiments of the present disclosure;
FIG. 7 is a view illustrating an example of a situation in which a service is provided among a server, an electronic apparatus, and a neighboring apparatus according to various embodiments of the present disclosure;
FIG. 8 is a view illustrating an example of a situation in which a service is provided among a server, an electronic apparatus, and a neighboring apparatus according to various embodiments of the present disclosure;
FIG. 9 is a view illustrating an example of a situation in which a service is provided among a server, an electronic apparatus, and a neighboring apparatus according to various embodiments of the present disclosure;
FIG. 10 is a signal flow diagram illustrating an example of a service providing operation flow among a server, an electronic apparatus, and a neighboring apparatus according to various embodiments of the present disclosure;
FIG. 11 is a view illustrating an example of a situation in which a service is provided among a server, an electronic apparatus, and a neighboring apparatus according to various embodiments of the present disclosure;
FIG. 12 is a view illustrating an example of a situation in which a service is provided among a server, an electronic apparatus, and a neighboring apparatus according to various embodiments of the present disclosure;
FIG. 13 is a view illustrating an example of a situation in which a service is provided among a server, an electronic apparatus, and a neighboring apparatus according to various embodiments of the present disclosure;
FIG. 14 is a view illustrating an example of a situation in which a service is provided among a server, an electronic apparatus, and a neighboring apparatus according to various embodiments of the present disclosure;
FIG. 15 is a signal flow diagram illustrating an example of a service providing operation flow among a server, an electronic apparatus, and a neighboring apparatus according to various embodiments of the present disclosure;
FIG. 16 is a view illustrating an example of a situation in which a service is provided between a server and an electronic apparatus according to various embodiments of the present disclosure;
FIG. 17 is a view illustrating an example of a situation in which a service is provided among a server, an electronic apparatus, and a neighboring apparatus according to various embodiments of the present disclosure;
FIG. 18 is a signal flow diagram illustrating an example of a service providing operation flow among a server, an electronic apparatus, and a neighboring apparatus according to various embodiments of the present disclosure;
FIG. 19 is a signal flow diagram illustrating an example of a service providing operation flow among a server, an electronic apparatus, and a neighboring apparatus according to various embodiments of the present disclosure;
FIG. 20 is a view illustrating an example of a situation in which a service is provided among a server, an electronic apparatus, and a neighboring apparatus according to various embodiments of the present disclosure;
FIG. 21 is a view illustrating an example of a situation in which a service is provided among a server, an electronic apparatus, and a neighboring apparatus according to various embodiments of the present disclosure;
FIG. 22 is a view illustrating an example of a situation in which a service is provided among a server, an electronic apparatus, and a neighboring apparatus according to various embodiments of the present disclosure;
FIG. 23 is a view illustrating an example of a situation in which a service is provided among a server, an electronic apparatus, and a neighboring apparatus according to various embodiments of the present disclosure;
FIG. 24 is a view illustrating an example of a situation in which a service is provided among a server, an electronic apparatus, and a neighboring apparatus according to various embodiments of the present disclosure;
FIG. 25 is a view illustrating an example of a situation in which a service is provided between an electronic apparatus and a neighboring apparatus according to various embodiments of the present disclosure;
FIG. 26 is a view illustrating an example of a situation in which a service is provided among a server, an electronic apparatus, and a neighboring apparatus according to various embodiments of the present disclosure;
FIG. 27 is a view illustrating an example of a situation in which a service is provided among a server, an electronic apparatus, and a neighboring apparatus according to various embodiments of the present disclosure;
FIG. 28 is a view illustrating an example of a situation in which a service is provided among a server, an electronic apparatus, and a neighboring apparatus according to various embodiments of the present disclosure;
FIG. 29 is a view illustrating an example of a network environment including a server, an electronic apparatus, and a neighboring apparatus in order to provide a service according to various embodiments of the present disclosure;
FIG. 30 is a view illustrating an example of a network environment including a server, an electronic apparatus, and a neighboring apparatus in order to provide a service according to various embodiments of the present disclosure;
FIG. 31 is a view illustrating an example of a network environment including a server, an electronic apparatus, and a neighboring apparatus in order to provide a service according to various embodiments of the present disclosure;
FIG. 32 is a view illustrating an example of a network environment including a server, an electronic apparatus, and a neighboring apparatus in order to provide a service according to various embodiments of the present disclosure;
FIG. 33 is a signal flow diagram illustrating an example of a service providing operation flow among a server, an electronic apparatus, and a neighboring apparatus according to various embodiments of the present disclosure;
FIG. 34 is a signal flow diagram illustrating an example of a service providing operation flow among a server, an electronic apparatus, and a neighboring apparatus according to various embodiments of the present disclosure;
FIG. 35 is a view illustrating an example of a situation in which a service is provided among a server, an electronic apparatus, and a neighboring apparatus according to various embodiments of the present disclosure;
FIG. 36 is a signal flow diagram illustrating an example of a service providing operation flow among a server, an electronic apparatus, and a neighboring apparatus according to various embodiments of the present disclosure;
FIG. 37 is a view illustrating an example of a situation in which a service is provided among a server, an electronic apparatus, and a neighboring apparatus according to various embodiments of the present disclosure;
FIG. 38 is a signal flow diagram illustrating an example of a service providing operation flow among a server, an electronic apparatus, and a neighboring apparatus according to various embodiments of the present disclosure;
FIG. 39 is a block diagram illustrating an example of a configuration of an electronic apparatus according to various embodiments of the present disclosure; and
FIG. 40 is a block diagram illustrating an example of a configuration of a program module according to various embodiments of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims. It includes various specific details to assist in that understanding but these are to be regarded as merely exemplary. Accordingly, those of ordinary skill in the art will recognize that various changes and modifications of various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In the present disclosure, the expression "have", "may have", "include" or "may include" refers to existence of a corresponding feature (e.g., numerical value, function, operation, or components such as elements), and does not exclude existence of additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", "the first", or "the second" used in various embodiments of the present disclosure may modify various components regardless of the order and/or the importance but does not limit the corresponding components. The above expressions are used merely for the purpose of distinguishing an element from the other elements. For example, a first user device and a second user device indicate different user devices although both of them are user devices. For example, a first element may be termed a second element, and similarly, a second element may be termed a first element without departing from the scope of the present disclosure.

It should be understood that when an element (e.g., first element) is referred to as being (operatively or communicatively) "connected," or "coupled," to another element (e.g., second element), it may be directly connected or coupled directly to the other element or any other element (e.g., third element) may be interposer between them. In contrast, it may be understood that when an element (e.g., first element) is referred to as being "directly connected," or "directly coupled" to another element (second element), there are no element (e.g., third element) interposed between them.

The expression "configured to" used in the present disclosure may be exchanged with, for example, "suitable for", "having the capacity to", "designed to", "adapted to", "made to", or "capable of" according to the situation. The term "configured to" may not necessarily imply "specifically designed to" in hardware. Alternatively, in some situations, the expression "device configured to" may mean that the device, together with other devices or components, "is able to". For example, the phrase "processor adapted (or configured) to perform A, B, and C" may mean a dedicated processor (e.g. embedded processor) only for performing the corresponding operations or a generic-purpose processor (e.g., central processing unit (CPU) or application processor (AP)) that can perform the corresponding operations by executing one or more software programs stored in a memory device.

The terms used in the present disclosure are only used to describe specific embodiments of the present disclosure, and are not intended to limit the present disclosure. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary are to be interpreted to have the meanings equal to the contextual meanings in the relevant field of the art, and are not to be interpreted to have ideal or excessively formal meanings unless clearly defined in the present disclosure. In some cases, even the term defined in the present disclosure should not be interpreted to exclude embodiments of the present disclosure.

An electronic device according to various embodiments of the present disclosure, for example, may include at least one of a smartphone, a tablet personal computer (PC), a mobile phone, a video phone, an electronic book (e-book) reader, a desktop PC, a laptop PC, a netbook computer, a workstation, a server, a personal digital assistant (PDA), a portable multimedia player (PMP), an Moving Picture Experts Group phase 1 or phase 2 (MPEG-1 or MPEG-2) audio layer 3 (MP3) player, a mobile medical appliance, a camera, and a wearable device (e.g., smart glasses, a head-mounted-device (HMD), electronic clothes, an electronic bracelet, an electronic necklace, an electronic appcessory, an electronic tattoo, a smart mirror, or a smart watch).

In an embodiment of the present disclosure, the electronic device may be a smart home appliance. The home appliance may include at least one of, for example, a television, a digital versatile disc (DVD) player, an audio, a refrigerator, an air conditioner, a vacuum cleaner, an oven, a microwave oven, a washing machine, an air cleaner, a set-top box, a home automation control panel, a security control panel, a TV box (e.g., Samsung HomeSync™, Apple TV™ or Google TV™), a game console (e.g., Xbox™ and PlayStation™), an electronic dictionary, an electronic key, a camcorder, and an electronic photo frame.

According to another embodiment of the present disclosure, the electronic device may include at least one of various medical devices (e.g., various portable medical measuring devices (a blood glucose monitoring device, a heart rate monitoring device, a blood pressure measuring device, a body temperature measuring device, etc.), a magnetic resonance angiography (MRA), a magnetic resonance imaging (MRI), a computed tomography (CT) machine, and an ultrasonic machine), a navigation device, a global positioning system (GPS) receiver, an event data recorder (EDR), a flight data recorder (FDR), a vehicle infotainment devices, an electronic devices for a ship (e.g., a navigation device for a ship, and a gyro-compass), avionics, security devices, an automotive head unit, a robot for home or industry, an automatic teller's machine (ATM) in banks, point of sales (POS) in a shop, or internet device of things (e.g., a light bulb, various sensors, electric or gas meter, a sprinkler device, a fire alarm, a thermostat, a streetlamp, a toaster, a sporting goods, a hot water tank, a heater, a boiler, etc.).

According to some embodiments of the present disclosure, the electronic device may include at least one of a part of furniture or a building/structure, an electronic board, an electronic signature receiving device, a projector, and various kinds of measuring instruments (e.g., a water meter, an electric meter, a gas meter, and a radio wave meter).

The electronic device according to various embodiments of the present disclosure may be a combination of one or more of the aforementioned various devices. The electronic device according to some embodiments of the present disclosure may be a flexible device. Further, the electronic device according to an embodiment of the present disclosure is not limited to the aforementioned devices, and may include a new electronic device according to the development of technology.

Hereinafter, an electronic device according to various embodiments of the present disclosure will be described with reference to the accompanying drawings. As used herein, the term "user" may indicate a person who uses an electronic device or a device (e.g., an artificial intelligence electronic device) that uses an electronic device.

A neighboring apparatus, according to various embodiments of the present disclosure, is at least one electronic apparatus which is connected to an electronic apparatus by wire or wirelessly. Examples of the neighboring apparatus may include a wearable apparatus (e.g., a smart watch), an earphone, an automobile, a navigation apparatus, a smart phone, a tablet personal computer (PC), and the like, and may further include various electronic apparatuses capable of being connected to the electronic apparatus.

Information on the neighboring apparatus, according to various embodiments of the present disclosure, may include at least one piece of information among display information, application execution information, communication information, service-available information, service-available time information, network information, and information on the previously-connected neighboring apparatus, and may further include various pieces of information capable of being acquired from the neighboring apparatus.

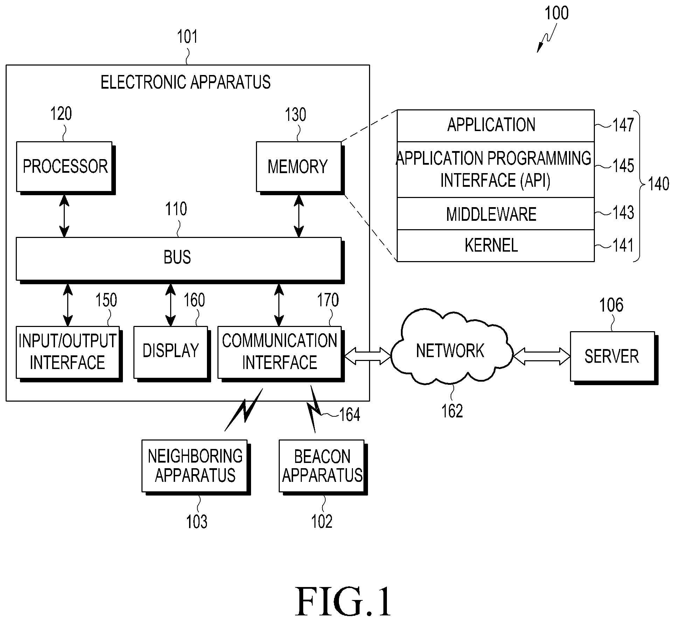

FIG. 1 is a view illustrating an example of a network environment according to various embodiments of the present disclosure.

Referring to FIG. 1, the network environment 100 may include an electronic apparatus 101, at least one beacon apparatus 102, at least one neighboring apparatus 103, and a server 106. The electronic apparatus 101 and the server 106 may be connected to each other through a network 162.

According to various embodiments of the present disclosure, the electronic apparatus 101 within the network environment 100 will be described. The electronic apparatus 101 may include at least one of a bus 110, a processor 120, a memory 130, an input/output interface 150, a display 160, and a communication interface 170.

According to various embodiments of the present disclosure, at least one of the above elements of the electronic apparatus 101 may be omitted from the electronic apparatus 101, or the electronic apparatus 101 may additionally include other elements.

The bus 110 may include, for example, a circuit that interconnects the elements and delivers a communication (e.g., a control message and/or data) between the elements.

The processor 120 may include one or more of a CPU, an AP, and a communication processor (CP). The processor 120 may perform, for example, calculations or data processing related to control over and/or communication by at least one of the other elements of the electronic apparatus 101.

The memory 130 may include a volatile memory and/or a nonvolatile memory. The memory 130 may store, for example, commands or data related to at least one of the other elements of the electronic apparatus 101. According to an embodiment of the present disclosure, the memory 130 may store software and/or a program 140. The program 140 may include, for example, a kernel 141, middleware 143, an application programming interface (API) 145, and/or an application program (or an application) 147. At least some of the kernel 141, the middleware 143, and the API 145 may be referred to as an "operating system (OS)."

For example, the kernel 141 may control or manage system resources (e.g., the bus 110, the processor 120, the memory 130, and the like) used to execute operations or functions implemented by the other programs (e.g., the middleware 143, the API 145, and the application program 147). Also, the kernel 141 may provide an interface capable of controlling or managing the system resources by accessing the individual elements of the electronic apparatus 101 by using the middleware 143, the API 145, or the application program 147.

For example, the middleware 143 may serve as an intermediary that enables the API 145 or the application program 147 to communicate with the kernel 141 and to exchange data therewith. Also, in relation to task requests received from the application program 147, the middleware 143 may perform control (e.g., scheduling or load balancing) over the task requests by using, for example, a method for assigning a priority, which enables the use of system resources (e.g., the bus 110, the processor 120, the memory 130, etc.) of the electronic apparatus 101, to at least one of the application programs 147.

The API 145 is, for example, an interface through which the application program 147 controls a function provided by the kernel 141 or the middleware 143, and may include, for example, at least one interface or function (e.g., command) for file control, window control, image processing, character control, or the like.

For example, the input/output interface 150 may serve as an interface capable of delivering a command or data, which is input from a user or another external device, to the element(s) other than the input/output interface 150 within the electronic apparatus 101. Also, the input/output interface 150 may output, to the user or another external device, commands or data received from the element(s) other than the input/output interface 150 within the electronic apparatus 101.

Examples of the display 160 may include a liquid crystal display (LCD), a light-emitting diode (LED) display, an organic light-emitting diode (OLED) display, a MicroElectroMechanical Systems (MEMS) display, and an electronic paper display. For example, the display 160 may display various pieces of content (e.g., text, images, videos, icons, symbols, etc.) to the user. The display 160 may include a touch screen, and may receive, for example, a touch input, a gesture input, a proximity input, or a hovering input provided by an electronic pen or a body part of the user.

The communication interface 170 may establish, for example, communication between the electronic apparatus 101 and an external apparatus (e.g., the beacon apparatus 102, the neighboring apparatus 103, or the server 106). For example, the communication interface 170 may be connected to a network 162 through wireless or wired communication and may communicate with the external apparatus (e.g., the neighboring apparatus 103 or the server 106).

The wireless communication may be performed by using at least one of, for example, long-term evolution (LTE), LTE-advanced (LTE-A), code division multiple access (CDMA), wideband CDMA (WCDMA), universal mobile telecommunications system (UMTS), wireless broadband (WiBro), and global system for mobile communications (GSM), as a cellular communication protocol. The wired communication may be performed by using at least one of, for example, a universal serial bus (USB), a high definition multimedia interface (HDMI), recommended standard 232 (RS-232), and a plain old telephone service (POTS). The network 162 may include at least one of communication networks, such as a computer network (e.g., a local area network (LAN), or a wide area network (WAN)), the Internet, and a telephone network.

The beacon apparatus 102 may broadcast a signal 164 including information related thereto. For example, the beacon signal may include unique User IDentifier (UUID) information including identifier information of the beacon apparatus.

The at least one neighboring apparatus 103 may be of a type identical to or different from that of the electronic apparatus 101. The at least one neighboring apparatus 103 may include at least one of, for example, a wearable apparatus (e.g., a smart watch), an earphone, an automobile, a navigation apparatus, a smart phone, a tablet PC, and the like.

According to various embodiments of the present disclosure, the server 106 may include a group of one or more servers.

According to various embodiments of the present disclosure, all or some of operations performed by the electronic apparatus 101 may be performed by another electronic apparatus or multiple electronic apparatuses (e.g., the beacon apparatus 102 and the neighboring apparatus 103, or the server 106).

According to various embodiments of the present disclosure, when the electronic apparatus 101 needs to perform some functions or services automatically or by a request, the electronic apparatus 101 may send, to another apparatus (e.g., the beacon apparatus 102, the neighboring apparatus 103, or the server 106), a request for performing at least some functions related to the functions or services, instead of performing the functions or services by itself, or additionally. Another electronic apparatus (e.g., the beacon apparatus 102, the neighboring apparatus 103, or the server 106) may execute the requested functions or the additional functions, and may deliver a result of the execution to the electronic apparatus 101. The electronic apparatus 101 may process the received result without any change or additionally and may provide the requested functions or services. To this end, use may be made of, for example, cloud computing technology, distributed computing technology, or client-server computing technology.

For example, the electronic apparatus, according to various embodiments of the present disclosure, may include a communication interface that receives information on the at least one neighboring apparatus related to the electronic apparatus, and a processor that controls a service related to at least one beacon signal on the basis of the information on the at least one neighboring apparatus when the beacon signal is received from the at least one beacon apparatus through the communication interface.

For example, the processor, according to various embodiments of the present disclosure, may send, to the server, a request for the service related to the beacon signal, and may control the at least one neighboring apparatus by using the service related to the beacon signal received from the server in response to the request.

For example, the information on the at least one neighboring apparatus, according to various embodiments of the present disclosure, may include at least one piece of information among display information, communication information, service-available information, sensor information, and service-available time information.

For example, the processor, according to various embodiments of the present disclosure, may perform a control operation for transmitting, to the server, display information on the at least one neighboring apparatus, and receiving, from the server, a service processed based on the display information.

For example, the processor, according to various embodiments of the present disclosure, may perform a control operation for transmitting, to the server, communication information on the at least one neighboring apparatus, and receiving, from the server, a service in a frequency band corresponding to the communication information.

For example, the processor, according to various embodiments of the present disclosure, may determine whether a request for the service related to the beacon signal is sent to the server, on the basis of service-available information on the at least one neighboring apparatus when the service-available information is received.

For example, the processor, according to various embodiments of the present disclosure, may perform a control operation for transmitting service-available time information on the at least one neighboring apparatus to the server, and receiving, from the server, the service related to the beacon signal which corresponds to the service-available time information.

For example, the processor, according to various embodiments of the present disclosure, may perform a control operation for transmitting, to the server, information on at least one sensor of the at least one neighboring apparatus, and receiving, from the server, information for controlling the at least one neighboring apparatus, on the basis of data from the at least one sensor.

For example, the processor, according to various embodiments of the present disclosure, may perform a control operation for transmitting, to the server, information on a network including the electronic apparatus, and receiving, from the server, a service related to at least one electronic apparatus included in the network.

For example, the processor, according to various embodiments of the present disclosure, may perform a control operation for transmitting, to the server, information on the at least one neighboring apparatus previously connected to the electronic apparatus, and receiving, from the server, a service related to the previously-connected at least one neighboring apparatus.

For example, the processor, according to various embodiments of the present disclosure, may perform a control operation for receiving, from the server, security information for communicating with the server and the at least one neighboring apparatus.

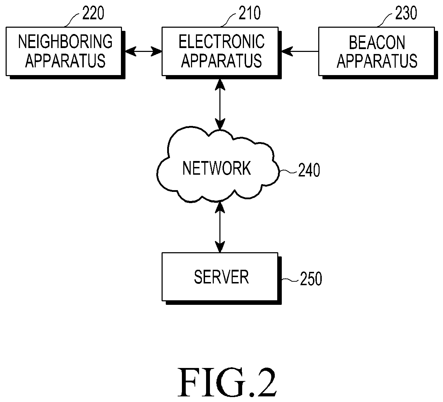

FIG. 2 is a block diagram illustrating an example of a network environment according to various embodiments of the present disclosure.

Referring to FIG. 2, the network environment may include an electronic apparatus 210, a neighboring apparatus 220, a beacon apparatus 230, and a server 250. For example, the electronic apparatus 210 and the server 250 may be connected to each other through a network 240.

According to various embodiments of the present disclosure, the electronic apparatus 210 may be connected to at least one neighboring apparatus (e.g., the neighboring apparatus 220), and may receive information related to the at least one neighboring apparatus from the relevant neighboring apparatus.

The electronic apparatus 210 may receive a beacon signal generated by the at least one beacon apparatus 230. The electronic apparatus 210 may send, to the server 250, a request for a service related to the received beacon signal.

In response to the request for the service, the electronic apparatus 210 may receive, from the server 250, the service related to the beacon signal. For example, the received service may include information for controlling the at least one neighboring apparatus (e.g., the neighboring apparatus 220) which is connected to the electronic apparatus 210 through short-range communication.

The neighboring apparatus 220 may transmit information on the neighboring apparatus to the electronic apparatus 210.

The beacon apparatus 230 may generate a beacon signal and may transmit the generated beacon signal to the at least one electronic apparatus. For example, the beacon signal may include identification information of the beacon apparatus 230, location information thereof, and the like.

The server 250 may receive the request for the service related to the beacon signal from the at least one electronic apparatus (e.g., the electronic apparatus 210). In response to the request for the service, the server 250 may provide the relevant electronic apparatus with the service related to the beacon signal.

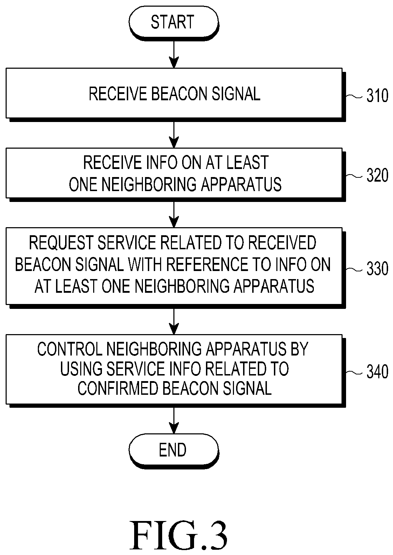

FIG. 3 is a flowchart illustrating an example of an operation flow of an electronic apparatus according to various embodiments of the present disclosure.

According to various embodiments of the present disclosure, the electronic apparatus may be in a state of being connected to the at least one neighboring apparatus.

Referring to FIG. 3, in operation 310, the electronic apparatus may receive a beacon signal.

In operation 320, the electronic apparatus may receive information on the at least one neighboring apparatus.

In operation 330, the electronic apparatus may request a service related to the received beacon signal with reference to information on the at least one neighboring apparatus.

In operation 340, the electronic apparatus may control the neighboring apparatus by using information received according to the request. For example, the information received according to the request may be information related to the beacon signal.

According to various embodiments of the present disclosure, the received information may be service information in which the information on the neighboring apparatus is reflected.

For example, a method for short-range communication in the electronic apparatus, according to various embodiments of the present disclosure, may include receiving information on the at least one neighboring apparatus related to the electronic apparatus, receiving at least one beacon signal from the at least one beacon apparatus, and controlling a service related to the beacon signal on the basis of the information on the at least one neighboring apparatus.

For example, the method for short-range communication in the electronic apparatus, according to various embodiments of the present disclosure, may further include sending, to the server, a request for the service related to the beacon signal, and controlling the at least one neighboring apparatus by using the service related to the beacon signal received from the server in response to the request.

For example, the information on the at least one neighboring apparatus, according to various embodiments of the present disclosure, may include at least one piece of information among display information, communication information, service-available information, sensor information, and service-available time information.

For example, the method for short-range communication in the electronic apparatus, according to various embodiments of the present disclosure, may further include transmitting display information on the at least one neighboring apparatus to the server, and receiving, from the server, a service processed based on the display information.

For example, the method for short-range communication in the electronic apparatus, according to various embodiments of the present disclosure, may further include transmitting communication information on the at least one neighboring apparatus to the server, and receiving a service from the server in a frequency band corresponding to the communication information.

For example, the method for short-range communication in the electronic apparatus, according to various embodiments of the present disclosure, may further include determining whether a request for the service related to the beacon signal is sent to the server, on the basis of service-available information on the at least one neighboring apparatus when the service-available information is received.

The method for short-range communication in the electronic apparatus, according to various embodiments of the present disclosure, may further include transmitting service-available time information on the at least one neighboring apparatus to the server, and receiving, from the server, the service related to the beacon signal which corresponds to the service-available time information.

For example, the method for short-range communication in the electronic apparatus, according to various embodiments of the present disclosure, may further include transmitting, to the server, information on at least one sensor in the at least one neighboring apparatus, and receiving, from the server, information for controlling the at least one neighboring apparatus, on the basis of data from the at least one sensor.

For example, the method for short-range communication in the electronic apparatus, according to various embodiments of the present disclosure, may further include transmitting, to the server, information on a network including the electronic apparatus, and receiving, from the server, a service related to at least one electronic apparatus included in the network.

For example, the method for short-range communication in the electronic apparatus, according to various embodiments of the present disclosure, may further include transmitting, to the server, information on the at least one neighboring apparatus previously connected to the electronic apparatus, and receiving, from the server, a service related to the previously-connected at least one neighboring apparatus.

For example, the method for short-range communication in the electronic apparatus, according to various embodiments of the present disclosure, may further include receiving, from the server, security information for communicating with the server and the at least one neighboring apparatus.

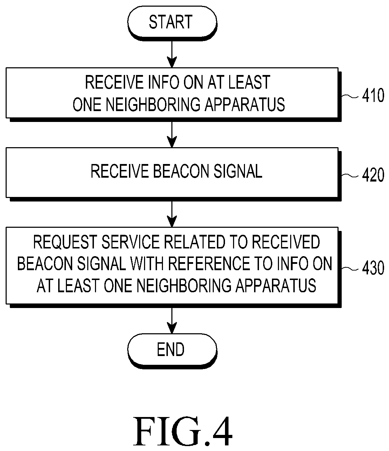

FIG. 4 is a flowchart illustrating an example of an operation flow of an electronic apparatus according to various embodiments of the present disclosure.

Referring to FIG. 4, in operation 410, the electronic apparatus may receive information on the at least one neighboring apparatus.

In operation 420, the electronic apparatus may receive a beacon signal.

In operation 430, the electronic apparatus may send, to the server, a request for a service related to the received beacon signal with reference to the information on the at least one neighboring apparatus.

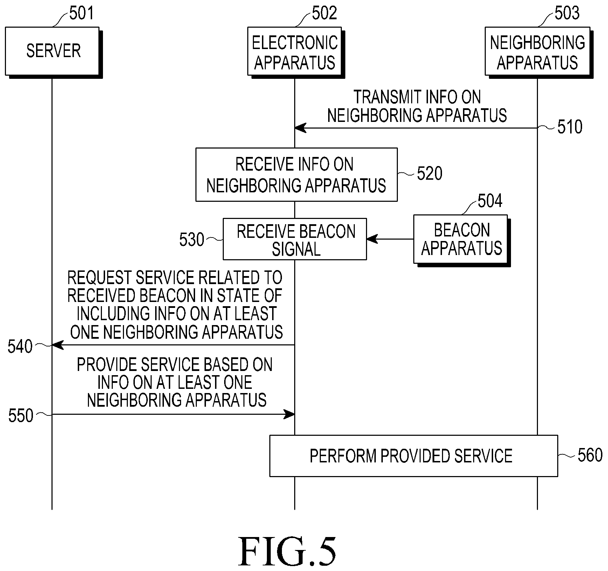

FIG. 5 is a signal flow diagram illustrating an example of a service providing operation flow among a server, an electronic apparatus, and a neighboring apparatus according to various embodiments of the present disclosure.

Referring to FIG. 5, in operation 510, the neighboring apparatus 503 may transmit information on the neighboring apparatus to the electronic apparatus 502.

In operation 520, the electronic apparatus 502 may receive the information on the at least one neighboring apparatus, from the neighboring apparatus.

According to various embodiments of the present disclosure, the operation of receiving the information on the neighboring apparatus may be performed after a subsequent operation of receiving a beacon signal.

In operation 530, the electronic apparatus 502 may receive a beacon signal generated by the at least one beacon apparatus 504.

In operation 540, the electronic apparatus 502 may send, to the server 501, a request for a service related to the received beacon signal in a state of including the information on the at least one neighboring apparatus.

In operation 550, the server 501 may provide a service to the electronic apparatus 502 on the basis of the information on the at least one neighboring apparatus.

In operation 560, the electronic apparatus 502 may perform the provided service, and the service provided by the server 501 may also be performed by the at least one neighboring apparatus 503, according to the control of the electronic apparatus 502.

A network environment in which a service providing operation is performed, according to various embodiments of the present disclosure, may include at least one of an electronic apparatus, at least one neighboring apparatus, a beacon apparatus, a server, and software which are connected to the electronic apparatus. The software may be located outside the electronic apparatus or may be included in the electronic apparatus. The service providing operation may be performed such that a service is provided to the at least one electronic apparatus connected to the software or the software stored in the electronic apparatus is controlled by a processor of the electronic apparatus.

According to various embodiments of the present disclosure, the software may include at least one of an application layer, a framework, and a physical layer. An application included in the electronic apparatus (e.g., an electronic apparatus and a neighboring apparatus) may be controlled through the application layer. The framework may control an overall operation of the software. Data may be transmitted and received according to a command in the application layer or the framework through the physical layer.

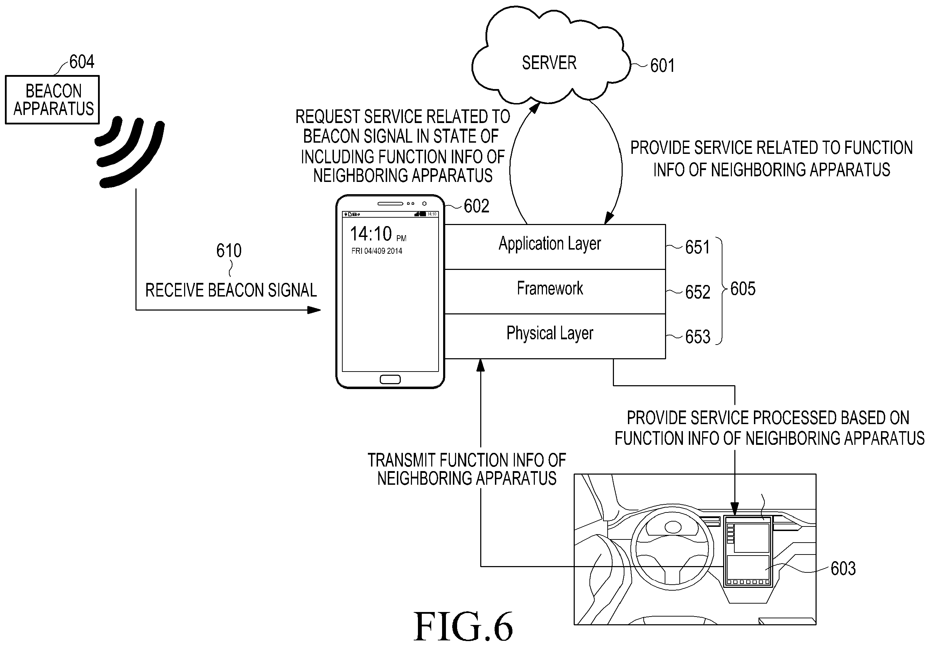

FIG. 6 is a view illustrating an example of a situation in which a service is provided among a server 601, an electronic apparatus 602, and a neighboring apparatus according to various embodiments of the present disclosure. Referring to FIG. 6, a network environment for providing a service may include the server 601, the electronic apparatus 602, the neighboring apparatus 603, and at least one beacon apparatus 604.

The beacon apparatus 604 may transmit a beacon signal 610.

The electronic apparatus 602 may receive information on the neighboring apparatus, and may request a service with reference to the received information on the neighboring apparatus.

Software 605 that the electronic apparatus 602 uses to perform a service providing operation may include an application layer 651, a framework 652, and a physical layer 653.

The application layer 651 may process a service provided by the server 601 by using function information of the neighboring apparatus, and may deliver the processed service to the neighboring apparatus.

When the framework 652 confirms the transmission of the beacon signal or the function information of the neighboring apparatus, the framework 652 may send, to the server 601, a request for a service related to the beacon signal in a state of including the function information of the neighboring apparatus.

The neighboring apparatus 603 may transmit the function information of the neighboring apparatus (e.g., an automobile or a navigation apparatus) to the electronic apparatus 602. For example, the beacon signal or the function information of the neighboring apparatus may be transmitted through the physical layer 653.

The server 601 may receive the request for the service from the electronic apparatus 602, and may provide the service related to the beacon signal. The service provided by the server 601 may be provided in the application layer.

According to various embodiments of the present disclosure, the service delivered from the server 601 to the neighboring apparatus may be processed based on the function information of the relevant neighboring apparatus, and the processed service may be provided to the neighboring apparatus. For example, each neighboring apparatus may receive a service appropriate for the relevant neighboring apparatus, according to the function information of the relevant neighboring apparatus.

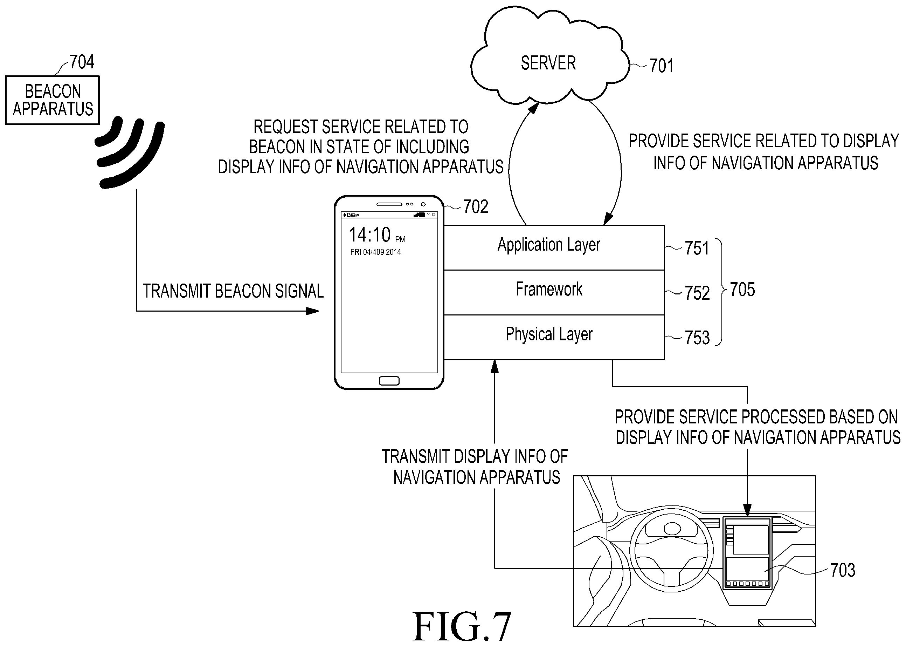

Examples of various services which may be received according to the function information of the neighboring apparatus will be described below with reference to FIGS. 7 to 9.

FIG. 7 is a view illustrating an example of a situation in which a service is provided among a server, an electronic apparatus, and a neighboring apparatus according to various embodiments of the present disclosure.

Referring to FIG. 7, a network environment for providing a service may include the server 701, the electronic apparatus 702, the neighboring apparatus 703, and a beacon apparatus 704.

The beacon apparatus 704 may transmit a beacon signal. For example, the beacon signal may include information notifying that the beacon apparatus 704 is located at a particular shop (e.g., a restaurant).

The neighboring apparatus (e.g., a navigation apparatus) 703 may transmit, to the electronic apparatus 702, display information as an example of function information of the neighboring apparatus. For example, the display information may include information, such as the size of a display, whether a touch input can be performed on the display, and the like.

The electronic apparatus 702 may receive information on the neighboring apparatus, and may request a service with reference to the received information on the neighboring apparatus.

Software 705 that the electronic apparatus 702 uses to perform a service providing operation may include an application layer 751, a framework 752, and a physical layer 753.

The application layer 751 may process a service, which is provided by the server 701, by using display information of the neighboring apparatus so as to be appropriately displayed by the relevant neighboring apparatus, and may deliver the processed service to the neighboring apparatus. For example, when the server 701 provides advertisement information related to the beacon signal, the provided advertisement information may be processed based on function information of the particular neighboring apparatus, and the processed advertisement information may be displayed by the relevant neighboring apparatus.

When the framework 752 confirms the transmission of the beacon signal or the function information of the neighboring apparatus 703, the framework 752 may send, to the server 701, a request for a service related to the beacon signal in a state of including the function information of the neighboring apparatus 703. For example, the beacon signal or the function information of the neighboring apparatus may be transmitted through the physical layer 753.

The server 701 may receive the request for the service from the electronic apparatus 702, and may provide the service related to the beacon signal. For example, the beacon signal may include information notifying that the beacon apparatus 704 is located at a particular restaurant, and thus the service related to the beacon signal may provide coupon information, advertisement information, or the like issued by the relevant restaurant. The service provided by the server 701 may be provided in the application layer 751.

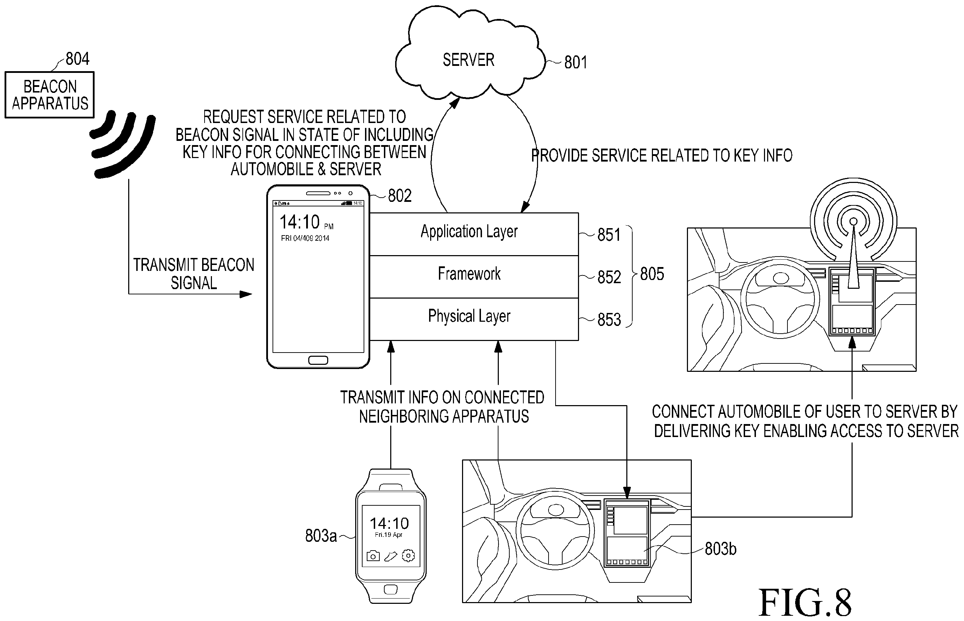

FIG. 8 is a view illustrating an example of a situation in which a service is provided among a server, an electronic apparatus, and a neighboring apparatus according to various embodiments of the present disclosure.

Referring to FIG. 8, a network environment for providing a service may include the server 801, the electronic apparatus 802, the at least one neighboring apparatus 803a or 803b, and a beacon apparatus 804.

The beacon apparatus 804 may transmit a beacon signal. For example, the beacon signal may include information notifying that the beacon apparatus is located at a particular shop (e.g., a restaurant).

The at least one neighboring apparatus (e.g., an automobile) 803a or 803b may transmit function information of the neighboring apparatus 803 to the electronic apparatus 802. For example, the function information of the at least one neighboring apparatus 803a or 803b may include key information for security. The key information may include information for increasing the security of a connection between the automobile and the server 801.

The electronic apparatus 802 may receive information on the neighboring apparatus, and may request a service with reference to the received information on the neighboring apparatus.

Software 805 that the electronic apparatus 802 uses to perform a service providing operation may include an application layer 851, a framework 852, and a physical layer 853.

The application layer 851 may perform a control operation for making a connection between the neighboring apparatus 803a or 803b and the server 801 by using key information provided by the server 801. For example, the connection may be made so that the neighboring apparatus 803a or 803b may access a server of a particular restaurant and may perform electronic settlement.

When the framework 852 confirms the transmission of the beacon signal or the key information of the neighboring apparatus 803, the framework 852 may send, to the server 801, a request for a service related to the beacon signal in a state of including the key information of the neighboring apparatus 803a or 803b. For example, the beacon signal or the key information of the neighboring apparatus may be transmitted through the physical layer 853.

The server 801 may receive the request for the service from the electronic apparatus 802, and may provide a service related to the beacon signal or information (e.g., key information) of the neighboring apparatus 803a or 803b. For example, the beacon signal may include information notifying that the beacon apparatus 804 is located at a particular restaurant, and thus the service related to the beacon signal may include key information which enables access to a settlement system of a server of the relevant restaurant. The service provided by the server 801 may be provided in the application layer 851.

According to various embodiments of the present disclosure, a user of the electronic apparatus 802 does not need to perform an operation of manipulating the neighboring apparatus 803a or 803b and connecting between the server 801 and the relevant neighboring apparatus in order perform electronic settlement through the neighboring apparatus 803a or 803b, but the electronic apparatus 802 may connect the server 801 to the neighboring apparatus 803a or 803b by using information on the neighboring apparatus connected to the electronic apparatus 802.

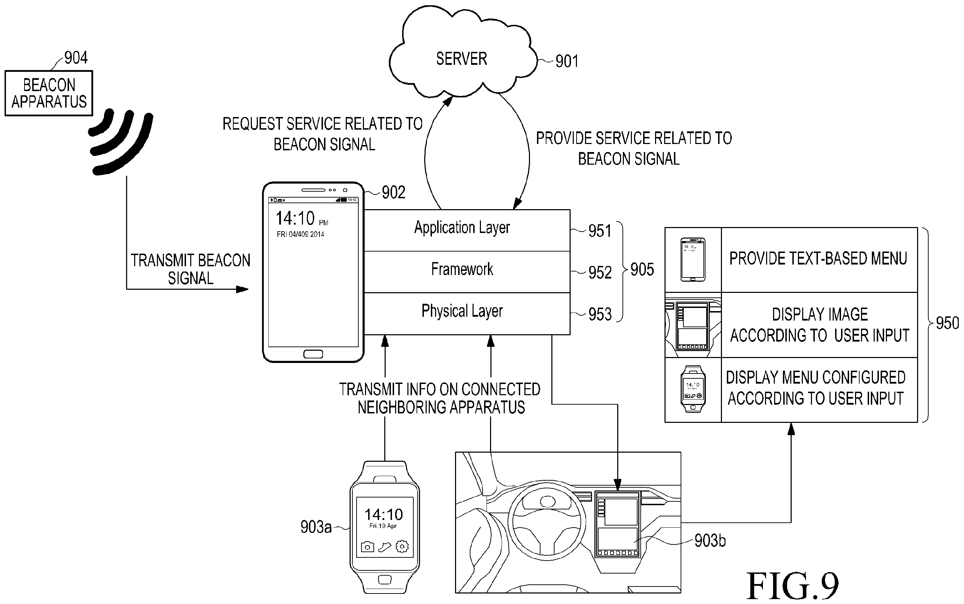

FIG. 9 is a view illustrating an example of a situation in which a service is provided among a server, an electronic apparatus, and a neighboring apparatus according to various embodiments of the present disclosure.

Referring to FIG. 9, a network environment for providing a service may include the server 901, the electronic apparatus 902, the at least one neighboring apparatus 903a or 903b, and a beacon apparatus 904.

The beacon apparatus 904 may transmit a beacon signal. For example, the beacon signal may include information notifying that the beacon apparatus 904 is located at a particular shop (e.g., a restaurant).

The neighboring apparatus 903a or 903b may transmit, to the electronic apparatus 902, display information as an example of function information of the neighboring apparatus. For example, the display information may include information, such as whether an image can be output by a relevant display, whether a touch input can be performed on the relevant display, and the like.

The electronic apparatus 902 may receive information on the neighboring apparatus, and may request a service with reference to the received information on the neighboring apparatus.

Software 905 that the electronic apparatus 902 uses to perform a service providing operation may include an application layer 951, a framework 952, and a physical layer 953.

The application layer 951 may control such that the neighboring apparatus displays a service provided by the server 901, by using display information of the relevant neighboring apparatus. The service provided by the server 901 may be delivered to the at least one neighboring apparatus 903a or 903b. For example, when only text is capable of being displayed by a display of the relevant neighboring apparatus, a service 950, which is delivered to the at least one neighboring apparatus 903a or 903b through the application layer 951, enables a menu of the restaurant to be displayed as a text-based menu. Alternatively, when a touch input is capable of being detected by the display of the relevant neighboring apparatus, the service 950 enables the relevant menu to be displayed as an image of a particular menu, according to a user input, or enables the relevant menu to be displayed as a menu configured according to a user input.

When the framework 952 confirms the transmission of the beacon signal or function information of the neighboring apparatus, the framework 952 may send, to the server 901, a request for a service related to the beacon signal in a state of including the function information of the neighboring apparatus 903a or 903b. For example, the beacon signal or the function information of the neighboring apparatus may be transmitted through the physical layer 953.

The server 901 may receive the request for the service from the electronic apparatus 902, and may provide the service related to the beacon signal. For example, the beacon signal may include information notifying that the beacon apparatus 904 is located at a particular restaurant, and thus the service related to the beacon signal may include menu information served at the relevant restaurant. The service provided by the server 901 may be provided in the application layer 951.

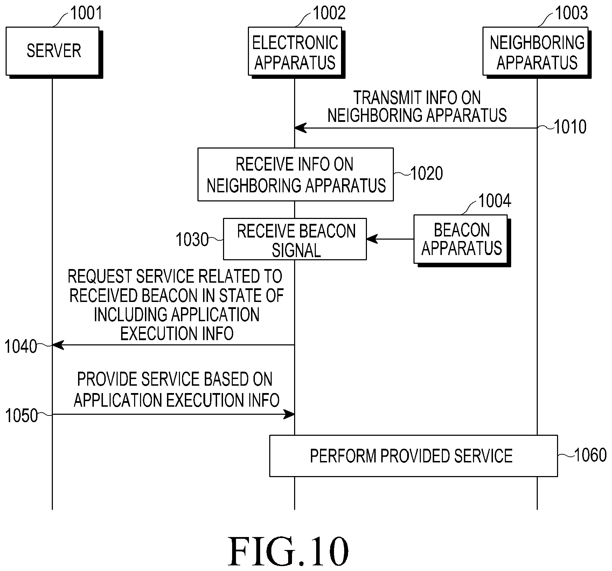

FIG. 10 is a signal flow diagram illustrating an example of a service providing operation flow among a server, an electronic apparatus, and a neighboring apparatus according to various embodiments of the present disclosure.

Referring to FIG. 10, in operation 1010, the neighboring apparatus 1003 may transmit information on the neighboring apparatus to the electronic apparatus 1002.

In operation 1020, the electronic apparatus 1002 may receive information on the at least one neighboring apparatus, from the neighboring apparatus.

According to various embodiments of the present disclosure, the operation of receiving the information on the neighboring apparatus may be performed after a subsequent operation of receiving a beacon signal.

In operation 1030, the electronic apparatus 1002 may receive a beacon signal generated by the at least one beacon apparatus 1004.

In operation 1040, the electronic apparatus 1002 may send, to the server 1001, a request for a service related to the received beacon signal in a state of including application execution information of the at least one neighboring apparatus.

In operation 1050, the server 1001 may provide a service to the electronic apparatus 1002 on the basis of the application execution information.

In operation 1060, the electronic apparatus 1002 may perform the provided service, and the service provided by the server 1001 may also be performed by the at least one neighboring apparatus 1003, according to the control of the electronic apparatus 1002.

According to various embodiments of the present disclosure, the service delivered from the server to the neighboring apparatus may be processed based on the application execution information of the neighboring apparatus, and the processed service may be provided to the neighboring apparatus. For example, each neighboring apparatus may receive a service appropriate for the relevant neighboring apparatus, according to information on how a particular application is executed by the relevant neighboring apparatus.

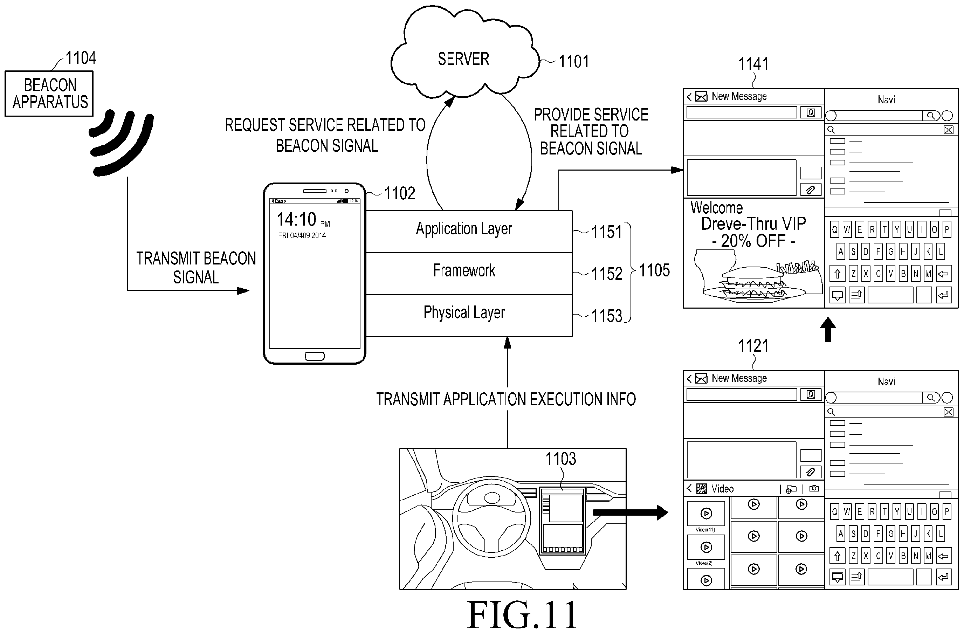

Examples of various services which may be received according to the application execution information of the neighboring apparatus will be described below with reference to FIGS. 11 to 14.

FIG. 11 is a view illustrating an example of a situation in which a service is provided among a server, an electronic apparatus, and a neighboring apparatus according to various embodiments of the present disclosure.

Referring to FIG. 11, a network environment for providing a service may include the server 1101, the electronic apparatus 1102, the neighboring apparatus 1103, and a beacon apparatus 1104.

The beacon apparatus 1104 may transmit a beacon signal. For example, the beacon signal may include information notifying that the beacon apparatus 1104 is located at a particular shop (e.g., a restaurant).

The neighboring apparatus 1103 may transmit application execution information of the neighboring apparatus 1103 to the electronic apparatus. For example, the application execution information may include information, such as information on an application currently being displayed, the size of a displayed application screen, a configuration of an application screen, and the like.

The electronic apparatus 1102 may receive information on the neighboring apparatus, and may request a service with reference to the received information on the neighboring apparatus.

Software 1105 that the electronic apparatus 1102 uses to perform a service providing operation may include an application layer 1151, a framework 1152, and a physical layer 1153.

When the framework 1152 confirms the transmission of the beacon signal or the application execution information of the neighboring apparatus 1103, the framework 1152 may send, to the server 1101, a request for a service related to the beacon signal in a state of including the application execution information of the neighboring apparatus 1103.

The application layer 1151 may configure the coupon information or advertisement information on a screen of an application, which is currently being executed, without obstructing a user's field of vision in the neighboring apparatus by using the application execution information of the neighboring apparatus, and may deliver the configured screen information to the neighboring apparatus 1103. For example, the beacon signal or the application execution information may be transmitted through the physical layer 1153.

The server 1101 may receive the request for the service from the electronic apparatus 1102, and may provide the service related to the beacon signal. For example, the beacon signal may include information notifying that the beacon apparatus 1104 is located at a particular restaurant, and thus the service related to the beacon signal may be a service related to coupon information, advertisement information, or the like issued by the relevant restaurant. The service provided by the server 1101 may be provided in the application layer.

According to various embodiments of the present disclosure, the neighboring apparatus 1103 may display a screen 1121 on which the execution of a navigation application, a message application, or a video reproduction application is displayed. For example, when the user approaches a particular restaurant, a beacon signal transmitted by a beacon apparatus installed at the restaurant enables the neighboring apparatus 1103 of the user to display the screen 1121 including coupon information or advertisement information related to the restaurant.

According to various embodiments of the present disclosure, coupon information or advertisement information serviced by the neighboring apparatus of the user may be disposed without obstructing the user's field of vision on a screen of an application currently being executed by the neighboring apparatus, as in the case of a screen 1141. While the user continuously executes the application through the neighboring apparatus, the user may confirm coupon information or advertisement information received from the server.

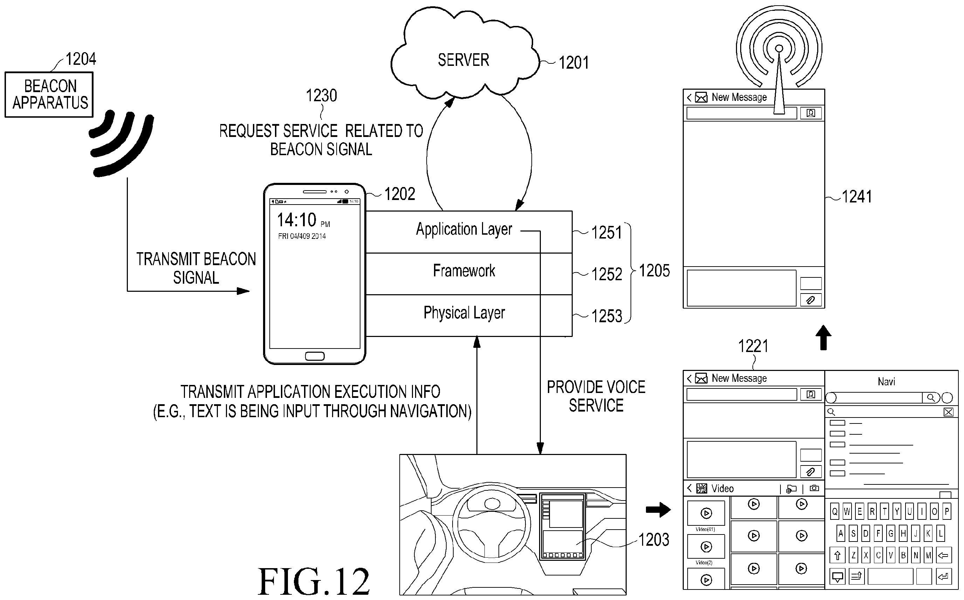

FIG. 12 is a view illustrating an example of a situation in which a service is provided among a server, an electronic apparatus, and a neighboring apparatus according to various embodiments of the present disclosure.

Referring to FIG. 12, a network environment for providing a service may include the server 1201, the electronic apparatus 1202, the neighboring apparatus 1203, and a beacon apparatus 1204.

The beacon apparatus 1204 may transmit a beacon signal. For example, the beacon signal may include information notifying that the beacon apparatus 1204 is located at a particular shop (e.g., a restaurant).

The neighboring apparatus 1203 may transmit application execution information of the neighboring apparatus 1203 to the electronic apparatus. For example, the application execution information may include information, such as information on an application currently being displayed, the size of a displayed application screen, a configuration of an application screen, and the like.

The electronic apparatus 1202 may receive information on the neighboring apparatus, and may request a service 1230 with reference to the received information on the neighboring apparatus.

Software 1205 that the electronic apparatus 1202 uses to perform a service providing operation may include an application layer 1251, a framework 1252, and a physical layer 1253.

The application layer 1251 may configure the coupon information or advertisement information on a screen of an application, which is currently being executed, without obstructing a user's field of vision in the neighboring apparatus by using the application execution information of the neighboring apparatus, and may deliver the configured screen information to the neighboring apparatus 1203.

When the framework 1252 confirms the transmission of the beacon signal or the application execution information of the neighboring apparatus 1203, the framework 1252 may send, to the server 1201, a request for a service related to the beacon signal in a state of including the application execution information of the neighboring apparatus 1203. For example, the beacon signal or the application execution information may be transmitted through the physical layer 1253.

The server 1201 may receive the request for the service from the electronic apparatus 1202, and may provide the service related to the beacon signal. For example, the beacon signal may include information notifying that the beacon apparatus 1204 is located at a particular restaurant, and thus the service related to the beacon signal may be a service related to coupon information, advertisement information, or the like issued by the relevant restaurant. The service provided by the server 1201 may be provided in the application layer 1251.

According to various embodiments of the present disclosure, the neighboring apparatus 1203 may display a screen 1221 on which the execution of a navigation application, a message application, or a video reproduction application is displayed.

According to various embodiments of the present disclosure, the neighboring apparatus 1203 transmits application execution information notifying that text is being input through the navigation, and thus the screen 1221 may be changed to a screen 1241 that provides a voice service related to coupon information or advertisement information related to the restaurant.

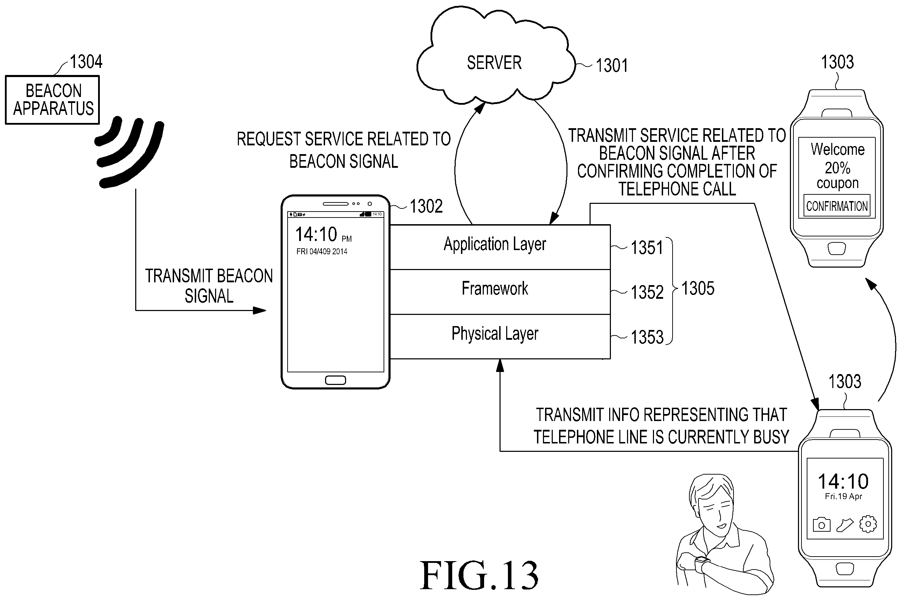

FIG. 13 is a view illustrating an example of a situation in which a service is provided among a server, an electronic apparatus, and a neighboring apparatus according to various embodiments of the present disclosure.

Referring to FIG. 13, a network environment for providing a service may include the server 1301, the electronic apparatus 1302, the neighboring apparatus 1303, and a beacon apparatus 1304.

The beacon apparatus 1304 may transmit a beacon signal. For example, the beacon signal may include information notifying that the beacon apparatus 1304 is located at a particular shop (e.g., a restaurant).

The neighboring apparatus (e.g., a smart watch) 1303 may transmit application execution information of the neighboring apparatus 1303 to the electronic apparatus 1302. For example, the neighboring apparatus 1303 may transmit, to the electronic apparatus 1302, information notifying a state in which a telephone line is currently busy.

The electronic apparatus 1302 may receive information on the neighboring apparatus, and may request a service with reference to the received information on the neighboring apparatus.

Software 1305 that the electronic apparatus 1302 uses to perform a service providing operation may include an application layer 1351, a framework 1352, and a physical layer 1353.

When the framework 1352 confirms the transmission of the beacon signal or the application execution information of the neighboring apparatus 1303, the framework 1352 may send, to the server 1301, a request for a service related to the beacon signal in a state of including the application execution information of the neighboring apparatus 1303. For example, the beacon signal or the application execution information may be transmitted through the physical layer 1353.

The server 1301 may receive the request for the service from the electronic apparatus 1302, and may provide the service related to the beacon signal. For example, the beacon signal may include information notifying that the beacon apparatus 1304 is located at a particular restaurant, and thus the service related to the beacon signal may be a service related to coupon information, advertisement information, or the like issued by the relevant restaurant. The service provided by the server 1301 may be provided in the application layer 1351.

The framework 1352 may confirm that a user is in a state of talking on the telephone by using the smart watch, through application execution information of the neighboring apparatus 1303, and may determine that the user is in a situation of having difficulty in confirming coupon information or advertisement information issued by a restaurant.

According to various embodiments of the present disclosure, when the framework 1352 determines that the user is currently executing a telephone call application and is in a situation of having difficulty in confirming information displayed by the neighboring apparatus, the framework 1352 may delay the provision of a service until the user stops the execution of the telephone call application. For example, after the telephone call by the user is completed which is performed through the neighboring apparatus 1303, the framework 1352 may provide the service related to the beacon signal which is received from the server 1301.

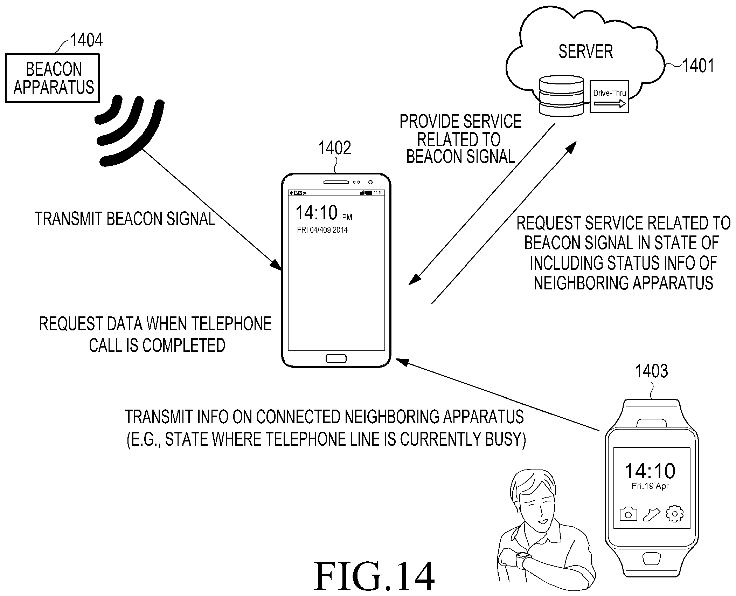

FIG. 14 is a view illustrating an example of a situation in which a service is provided among a server, an electronic apparatus, and a neighboring apparatus according to various embodiments of the present disclosure.

Referring to FIG. 14, a network environment for providing a service may include the server 1401, the electronic apparatus 1402, the at least one neighboring apparatus 1403, and a beacon apparatus 1404.

The beacon apparatus 1404 may transmit a beacon signal. For example, the beacon signal may include information notifying that the beacon apparatus 1404 is located at a particular shop (e.g., a restaurant).

The neighboring apparatus 1403 may transmit application execution information or function information of the neighboring apparatus 1403 to the electronic apparatus 1402. For example, the application execution information may include information representing that a user is currently talking on the telephone by using the neighboring apparatus 1403.

The electronic apparatus 1402 may include the received application execution information or function information, and may send, to the server 1401, a request for a service related to the beacon signal in a state of including the information on the at least one neighboring apparatus connected to the electronic apparatus 1402.

The server 1401 may confirm the received information (e.g., the function information or application execution information) on the at least one neighboring apparatus connected to the electronic apparatus 1402, and may provide the service related to the beacon signal. For example, the beacon signal may include information notifying that the beacon apparatus 1404 is located at a particular restaurant, and thus the service related to the beacon signal may provide coupon information, advertisement information, or the like issued by the relevant restaurant.

According to various embodiments of the present disclosure, when the user approaches a particular restaurant, the server 1401 allows the beacon signal, which is transmitted by the beacon apparatus installed at the restaurant, to enable the neighboring apparatus of the user to provide coupon information or advertisement information related to the restaurant.

According to various embodiments of the present disclosure, when the server 1401 confirms that the user is in a state of talking on the telephone by using a neighboring apparatus (e.g., the neighboring apparatus 1403) which is to receive a service, the server 1401 may provide a service to the electronic apparatus 1402 or a neighboring apparatus connected to the electronic apparatus 1402 except for the neighboring apparatus 1403. For example, when a service that the server 1401 is to provide is advertisement information or coupon information displayed on a screen, the relevant service may be provided to an apparatus including a display from among neighboring apparatuses connected to the electronic apparatus 1402.

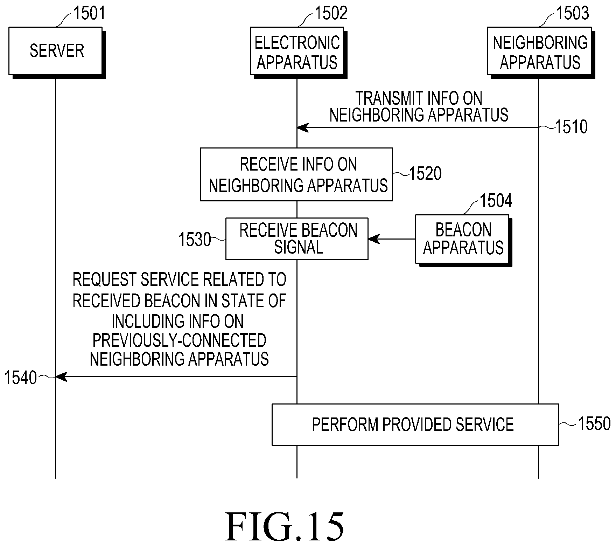

FIG. 15 is a signal flow diagram illustrating an example of a service providing operation flow among a server, an electronic apparatus, and a neighboring apparatus according to various embodiments of the present disclosure.

Referring to FIG. 15, in operation 1510, the neighboring apparatus 1503 may transmit information on the neighboring apparatus to the electronic apparatus 1502.

In operation 1520, the electronic apparatus 1502 may receive information on the at least one neighboring apparatus, from the neighboring apparatus.

According to various embodiments of the present disclosure, the operation of receiving the information on the neighboring apparatus may be performed after the electronic apparatus receives a beacon signal from the at least one beacon apparatus.

In operation 1530, the electronic apparatus 1502 may receive a beacon signal generated by the at least one beacon apparatus 1504.

In operation 1540, the electronic apparatus 1502 may send, to the server 1501, a request for a service related to the received beacon signal in a state of including information on a previously-connected neighboring apparatus. For example, the information on the previously-connected neighboring apparatus is information on the at least one neighboring apparatus previously connected to the electronic apparatus 1502, and may include a connection time period, function information of the connected neighboring apparatus, and the like.

The server 1501 may provide a service to the electronic apparatus 1502 on the basis of the information on the previously-connected neighboring apparatus.

In operation 1550, the electronic apparatus 1502 may perform the provided service, and the service provided by the server 1501 may also be performed by the at least one neighboring apparatus 1503, according to the control of the electronic apparatus 1502.

According to various embodiments of the present disclosure, the server may receive, from the electronic apparatus, a request for a service related to a beacon signal or information on a previously-connected neighboring apparatus. For example, when the beacon signal includes information related to a particular brand, the server may process advertisement service of the particular brand on the basis of the information on the previously-connected neighboring apparatus, and may provide the processed advertisement service to the electronic apparatus.

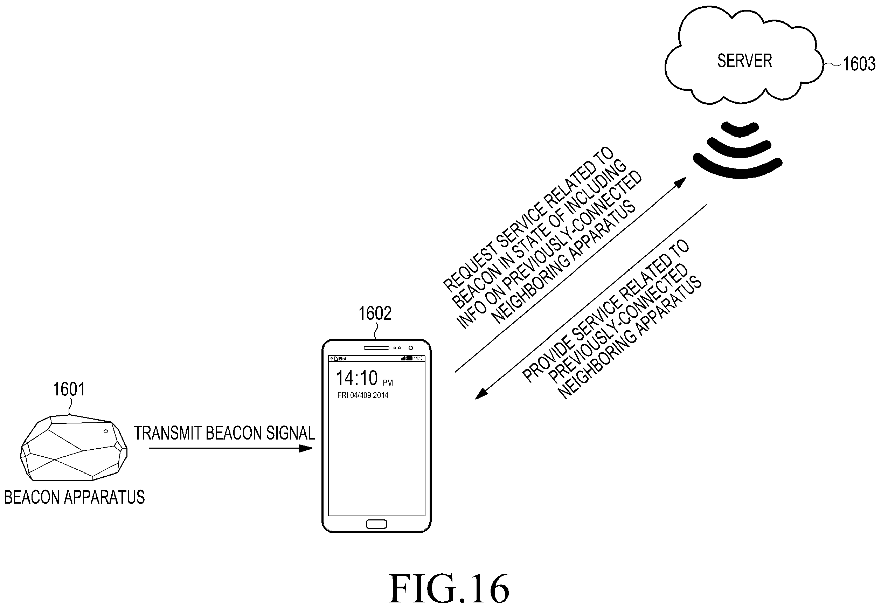

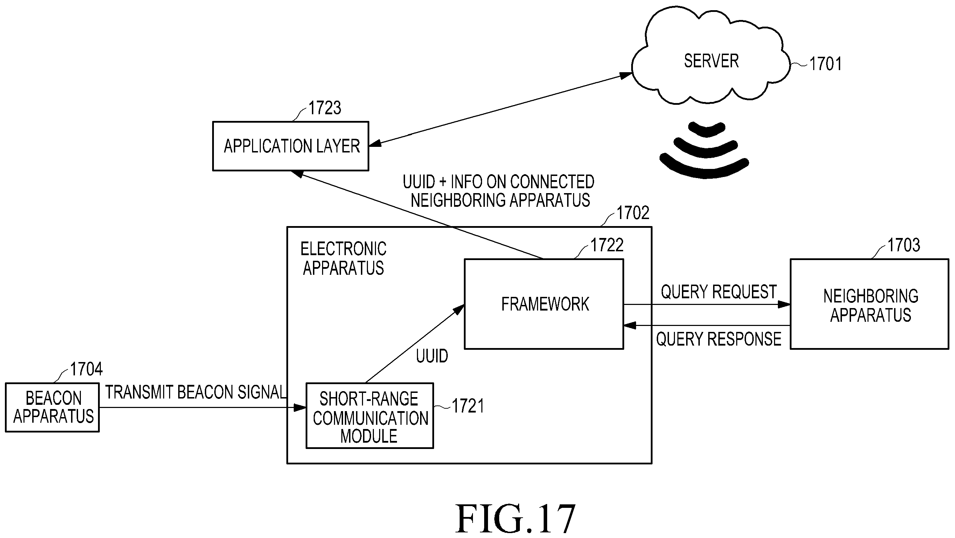

Examples of various services which may be received according to the information on the previously-connected neighboring apparatus will be described below with reference to FIGS. 16 and 17.

FIG. 16 is a view illustrating an example of a situation in which a service is provided between a server and an electronic apparatus according to various embodiments of the present disclosure.

Referring to FIG. 16, a network environment for providing a service may include the server 1603, the electronic apparatus 1602, and a beacon apparatus 1601.

The electronic apparatus 1602 may receive a beacon signal transmitted by the at least one beacon apparatus 1601 may transmit a beacon signal. For example, the beacon signal may include information related to a particular brand.

The electronic apparatus 1602 may request a service related to the received beacon signal in a state of including information on a previously-connected neighboring apparatus.

The server 1603 may receive the request for the service from the electronic apparatus 1602, and may provide the service related to the beacon signal. For example, the beacon signal may include information related to a particular brand, and thus the service related to the beacon signal may provide an advertisement related to the brand.

According to various embodiments of the present disclosure, the server 1603 may further provide a service related to the information on the previously-connected neighboring apparatus. For example, the electronic apparatus 1602 may further provide an advertisement related to the previously-connected at least one neighboring apparatus (e.g., an automobile, a headset, a smart watch, etc.).

FIG. 17 is a view illustrating an example of a situation in which a service is provided among a server, an electronic apparatus, and a neighboring apparatus according to various embodiments of the present disclosure.

Referring to FIG. 17, a network environment for providing a service may include the server 1701, the electronic apparatus 1702, and at least one beacon apparatus (e.g., a beacon apparatus 1704).

The beacon apparatus 1704 may transmit a beacon signal.

The electronic apparatus 1702 may include a short-range communication module 1721 and a framework 1722.

When receiving the beacon signal transmitted by the beacon apparatus, the short-range communication module 1721 may deliver a UUID included in the beacon signal to the framework 1722.

The framework 1722 may transmit, to an application layer 1723, the delivered UUID and information on a connected neighboring apparatus.

According to various embodiments of the present disclosure, the electronic apparatus 1702 may send a request for a query to the at least one neighboring apparatus 1703 which is being connected to the electronic apparatus 1702, and may confirm the information on the connected neighboring apparatus upon receiving a query response corresponding to the request.

The UUID and the information on the connected neighboring apparatus are transmitted to the server 1701 through the application layer 1723, and accordingly, the server 1701 may provide the electronic apparatus 1702 with a service related to the beacon signal or the information on the connected neighboring apparatus.

According to various embodiments of the present disclosure, the electronic apparatus may receive a beacon signal related to a particular brand, may send, to the server, a request for a service related to the received beacon signal in a state of including the information on the connected neighboring apparatus, and accordingly, may receive a service which is related to the received beacon signal and is related to the information on the connected neighboring apparatus.

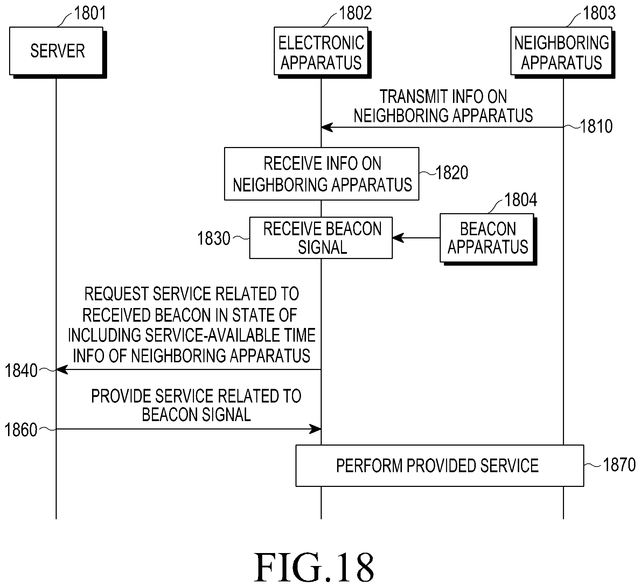

FIG. 18 is a signal flow diagram illustrating an example of a service providing operation flow among a server, an electronic apparatus, and a neighboring apparatus according to various embodiments of the present disclosure.

Referring to FIG. 18, in operation 1810, the neighboring apparatus 1803 may transmit information on the neighboring apparatus to the electronic apparatus 1802.

In operation 1820, the electronic apparatus 1802 may receive the information on the at least one neighboring apparatus, from the neighboring apparatus.

According to various embodiments of the present disclosure, the electronic apparatus may receive a beacon signal from at least one beacon apparatus, and may then perform the operation of receiving the information on the neighboring apparatus.

In operation 1830, the electronic apparatus 1802 may receive a beacon signal generated by the at least one beacon apparatus 1804.

In operation 1840, the electronic apparatus 1802 may send, to the server 1801, a request for a service related to the received beacon signal in a state of including service-available time information of the at least one neighboring apparatus.

According to various embodiments of the present disclosure, the server 1801 may confirm the service-available time information of the neighboring apparatus, may wait for a predetermined time period, and may then provide a service to the electronic apparatus 1802.

In operation 1860, the server 1801 may provide the electronic apparatus 1802 with the service related to the beacon signal.

According to various embodiments of the present disclosure, when the server 1801 does not confirm the service-available time information, operation 1860 may be omitted. The electronic apparatus 1802 may control the neighboring apparatus 1803 to perform a service at a time point when it is determined that the neighboring apparatus is capable of receiving the service, on the basis of the service-available time information of the neighboring apparatus.

In operation 1870, the electronic apparatus 1802 may perform the provided service, and the service provided by the server 1801 may also be performed by the at least one neighboring apparatus 1803, according to the control of the electronic apparatus 1802.

According to various embodiments of the present disclosure, the service delivered from the server to the neighboring apparatus may be provided at a particular time point according to the service-available time information of the neighboring apparatus. For example, each neighboring apparatus may receive an appropriate service at a time point when the relevant neighboring apparatus is capable of performing the service.

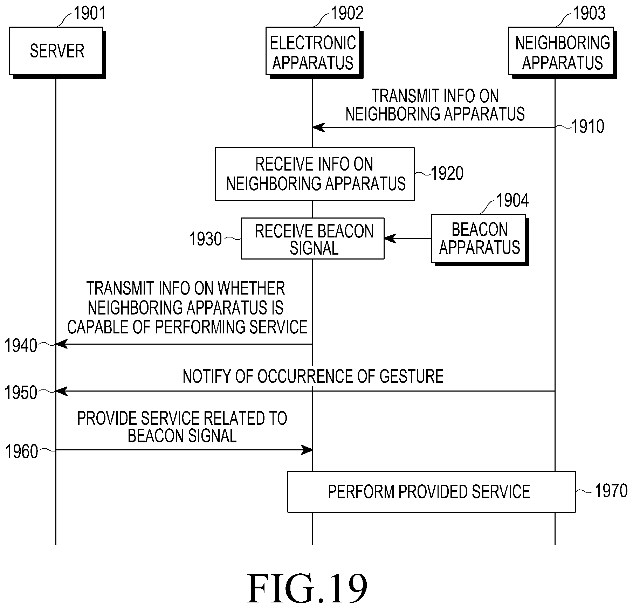

FIG. 19 is a signal flow diagram illustrating an example of a service providing operation flow among a server, an electronic apparatus, and a neighboring apparatus according to various embodiments of the present disclosure.

Referring to FIG. 19, in operation 1910, the neighboring apparatus 1903 may transmit information on the neighboring apparatus to the electronic apparatus 1902. For example, the information on the neighboring apparatus may include data which is input through a sensor of the relevant neighboring apparatus.

In operation 1920, the electronic apparatus 1902 may receive the information on the at least one neighboring apparatus, from the neighboring apparatus. For example, the electronic apparatus 1902 may confirm data which is input through the sensor of the neighboring apparatus, and may determine whether the neighboring apparatus is currently capable of performing a service.

According to various embodiments of the present disclosure, the electronic apparatus may receive a beacon signal from at least one beacon apparatus, and may then perform the operation of receiving the information on the neighboring apparatus.

In operation 1930, the electronic apparatus 1902 may receive a beacon signal generated by the at least one beacon apparatus 1904.

In operation 1940, the electronic apparatus 1902 may transmit, to the server 1901, information on whether the at least one neighboring apparatus is capable of performing a service.

In operation 1950, when a gesture occurs in the at least one neighboring apparatus 1903, the neighboring apparatus 1903 may notify the server 1901 of the occurrence of the gesture. For example, the neighboring apparatus 1903 may notify of the occurrence of the gesture, and thereby, the server 1901 may determine that the neighboring apparatus 1903 is capable of receiving the service.

In operation 1960, the server 1901 may provide a service related to the beacon signal.

In operation 1970, the electronic apparatus 1902 may perform the provided service, and the service provided by the server 1901 may also be performed by the at least one neighboring apparatus 1903, according to the control of the electronic apparatus 1902.

According to various embodiments of the present disclosure, the service delivered from the server to the neighboring apparatus may be provided at a particular time point according to the service-available time information of the neighboring apparatus. For example, each neighboring apparatus may receive an appropriate service at a time point when the relevant neighboring apparatus is capable of performing the service.

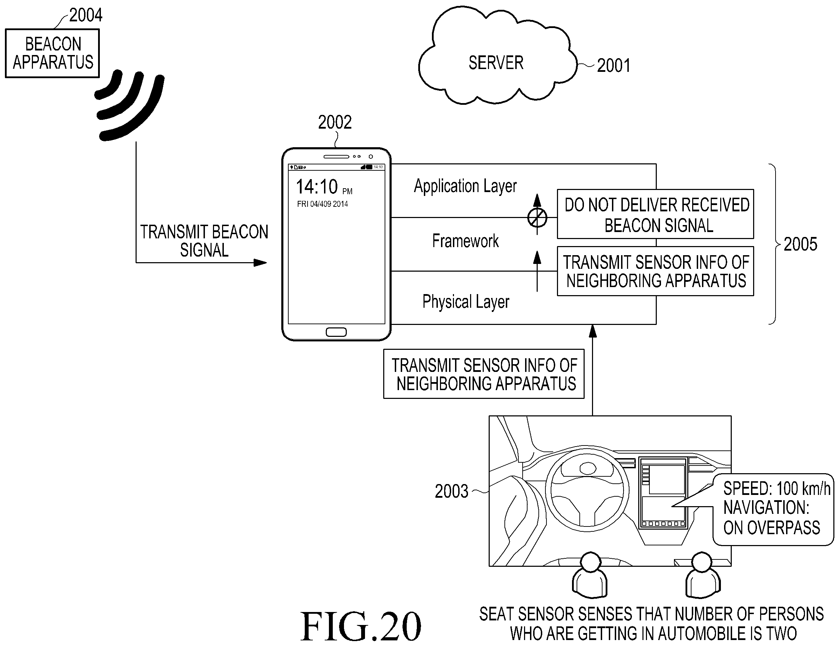

FIG. 20 is a view illustrating an example of a situation in which a service is provided among a server, an electronic apparatus, and a neighboring apparatus according to various embodiments of the present disclosure.

Referring to FIG. 20, a network environment for providing a service may include at least one of the server 2001, the electronic apparatus 2002, the at least one neighboring apparatus 2003, and a beacon apparatus 2004.

The electronic apparatus may receive a beacon signal transmitted by the at least one beacon apparatus. For example, the beacon signal may include information related to a particular brand.

The at least one neighboring apparatus 2003 may transmit data generated by a sensor of the neighboring apparatus 2003 (e.g., an automobile, or a navigation apparatus) to the electronic apparatus. For example, the data generated by the sensor may include data representing that an automobile is currently running at a speed of 100 km/h on an overpass and the number of persons who are getting in the automobile is two, which are sensed by a biometric sensor, a GPS sensor, and a speed sensor.

The data transmitted by the neighboring apparatus 2003 may be delivered to a framework through a physical layer of software 2005.

The framework, according to various embodiments of the present disclosure, may confirm sensor information of the neighboring apparatus 2003, and thereby may determine that it is dangerous to currently confirm data received from the server in the automobile. For example, the framework may not deliver the received beacon signal to an application layer of the electronic apparatus 2002.

According to various embodiments of the present disclosure, the electronic apparatus 2002 may determine that it is dangerous for the neighboring apparatus 2003 to currently receive a service, through the sensor information of the neighboring apparatus 2003, and may not send, to the server 2001, a request for a service related to the beacon signal.

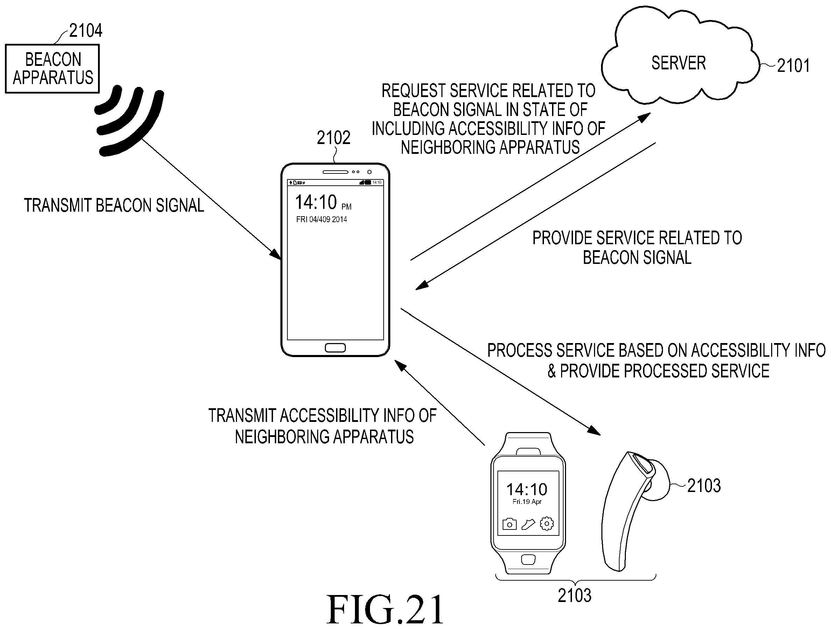

FIG. 21 is a view illustrating an example of a situation in which a service is provided among a server, an electronic apparatus, and a neighboring apparatus according to various embodiments of the present disclosure.

Referring to FIG. 21, a network environment for providing a service may include at least one of the server 2101, the electronic apparatus 2102, the at least one neighboring apparatus 2103, and a beacon apparatus 2104.

The beacon apparatus 2104 may transmit a beacon signal.

The at least one neighboring apparatus 2103 may transmit accessibility information of the neighboring apparatus.

The electronic apparatus 2102 may send, to the server 2101, a request for a service related to the beacon signal in a state of including the received accessibility information of the neighboring apparatus.

The server 2101 may receive the request for the service from the electronic apparatus 2102, and may provide the electronic apparatus 2102 with the service related to the beacon signal.

The electronic apparatus 2102 may process the service provided by the server 2101, on the basis of the accessibility information of the neighboring apparatus 2103, and may provide the processed service to the neighboring apparatus 2103, or may control the neighboring apparatus 2103 to perform a particular operation.

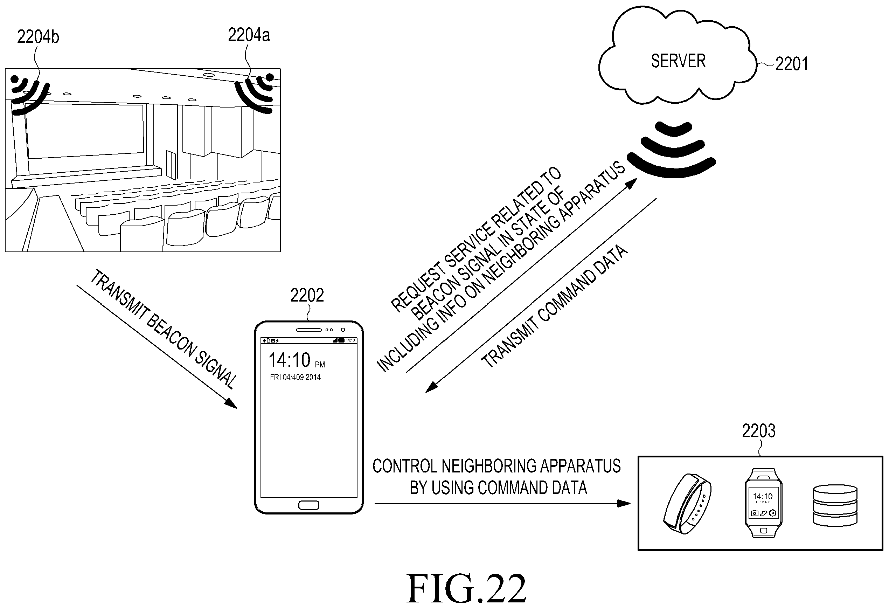

FIG. 22 is a view illustrating an example of a situation in which a service is provided among a server, an electronic apparatus, and a neighboring apparatus according to various embodiments of the present disclosure.

Referring to FIG. 22, a network environment for providing a service may include at least one of the server 2201, the electronic apparatus 2202, the at least one neighboring apparatus 2203, and at least one beacon apparatus 2204a or 2204b.

The at least one beacon apparatus 2204a or 2204b may transmit a beacon signal. For example, the beacon signal may include information representing that the at least one beacon apparatus 2204a or 2204b is located at a particular place (e.g., a movie theater or an airport), or may include time information (e.g., film screening information and flight information) related to the relevant place.

The at least one neighboring apparatus 2203 may transmit function information of the neighboring apparatus. For example, the function information of the neighboring apparatus may include information on a function controllable by the electronic apparatus 2202.

The electronic apparatus 2202 may send, to the server 2201, a request for a service related to the beacon signal in a state of including the received function information of the neighboring apparatus.

The server 2201 may receive the function information of the neighboring apparatus, and accordingly, may determine whether the electronic apparatus 2202 is capable of controlling the at least one neighboring apparatus 2203. The server 2201 may transmit command data to the electronic apparatus 2202 on the basis of a result of the determination. For example, the electronic apparatus 2202 may perform the service related to the beacon signal through the at least one neighboring apparatus 2203, by using the command data.

According to various embodiments of the present disclosure, the server 2201 may confirm information indicating that a movie theater is a film screening theater, or film screening information, which is included in a particular beacon signal, and accordingly, may provide a service which configures a function of the at least one neighboring apparatus 2203 connected to the electronic apparatus 2202.

According to various embodiments of the present disclosure, as the service which configures a function, the server 2201 may provide an application screen for integrally controlling the at least one neighboring apparatus 2203 on the screen of the electronic apparatus 2202, or may provide command data for controlling the at least one neighboring apparatus 2203. Examples of the function may include various functions that a user typically configures at a particular place, such as a function of silently outputting a notification received during a film screening time period or a flight time period, a function of deactivating a communication function, a function of darkening a screen, and the like.

For example, a user of the electronic apparatus 2202 may carry the at least one neighboring apparatus 2203 and may go to a movie theater. When a film screening start time is imminent, the user may manipulate the at least one neighboring apparatus 2203, and may set a mode of each neighboring apparatus to a manner mode in order to prevent a bell from ringing during the film screening, or may set the brightness of the display of each neighboring apparatus to be darkened so as not to inconvenience a person who sits behind the user due to turning on the screen.

According to various embodiments of the present disclosure, the electronic apparatus 2202 may send, to the server 2201, a request for a service related to the beacon signal indicating a movie theater in a state of including the function information of the at least one neighboring apparatus 2203. In response to the request, the electronic apparatus 2202 may display an application screen for controlling each neighboring apparatus, or may automatically set a function of each neighboring apparatus to a preset value. Accordingly, without performing an operation of manipulating each neighboring apparatus, the user may enter a particular place and the information on the neighboring apparatus may be transmitted, and thereby, a manner mode function of the display of the neighboring apparatus may be set.

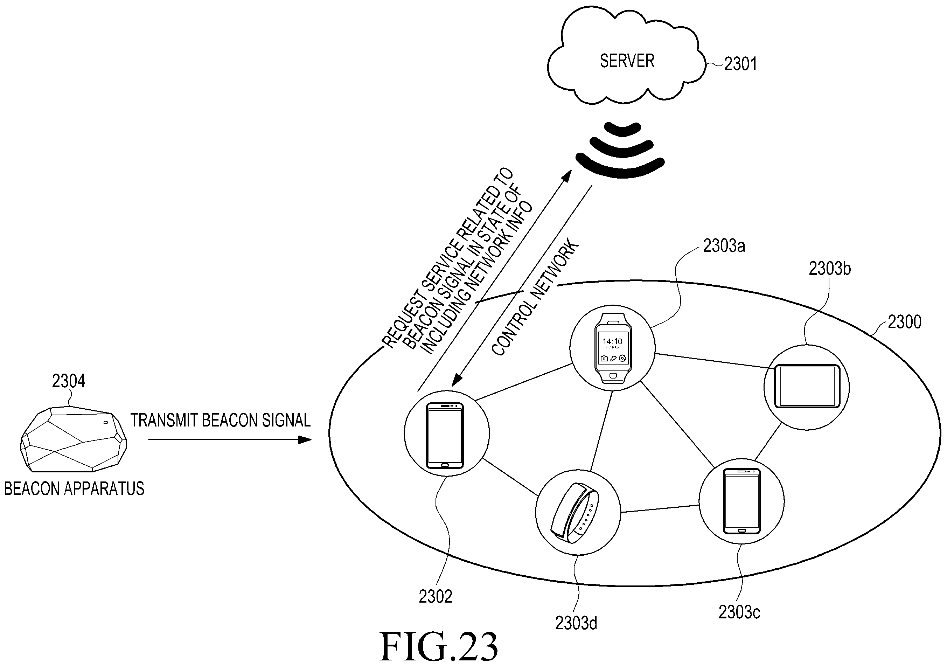

FIG. 23 is a view illustrating an example of a situation in which a service is provided among a server, an electronic apparatus, and a neighboring apparatus according to various embodiments of the present disclosure.

Referring to FIG. 23, a network environment for providing a service may include at least one of the server 2301, a short-range communication network 2300, and at least one beacon apparatus 2304.

The beacon apparatus 2304 may transmit a beacon signal.

The short-range communication network 2300 may include the electronic apparatus 2302 and the at least one neighboring apparatus 2303a to 2303d. For example, the electronic apparatus 2302 may serve as a master device of the short-range communication network 2300, and may control communication with the at least one neighboring apparatus (e.g., a first smart watch 2303a, a tablet PC 2303b, a smart phone 2303c, and a second smart watch 2303d).

In the short-range communication network 2300, the at least one electronic apparatus (e.g., the electronic apparatus 2302) may receive the beacon signal transmitted by the beacon apparatus 2304.

According to various embodiments of the present disclosure, the electronic apparatus 2302 serving as a master device may send, to the server, a request for a service related to the beacon signal in a state of including network information. For example, the network information may include information on a master device or a slave device, information on the number of electronic apparatuses included in the relevant network, communication information in the relevant network, service information (e.g., a game service, a media streaming service, or a chatting service) in the relevant network, service information capable of being supported by the electronic apparatus in the relevant network, communication status information of the relevant network, and control information of the relevant network.

In response to the request of the service, the server 2301 may provide the electronic apparatus 2302 with the service related to the beacon signal. For example, the electronic apparatus 2302 may transmit network information to the server, and accordingly, the service related to the beacon signal (i.e., the service provided by the server 2301) may include not only information that the electronic apparatus 2302 uses to control the network but also information capable of controlling the at least one electronic apparatus in the network.

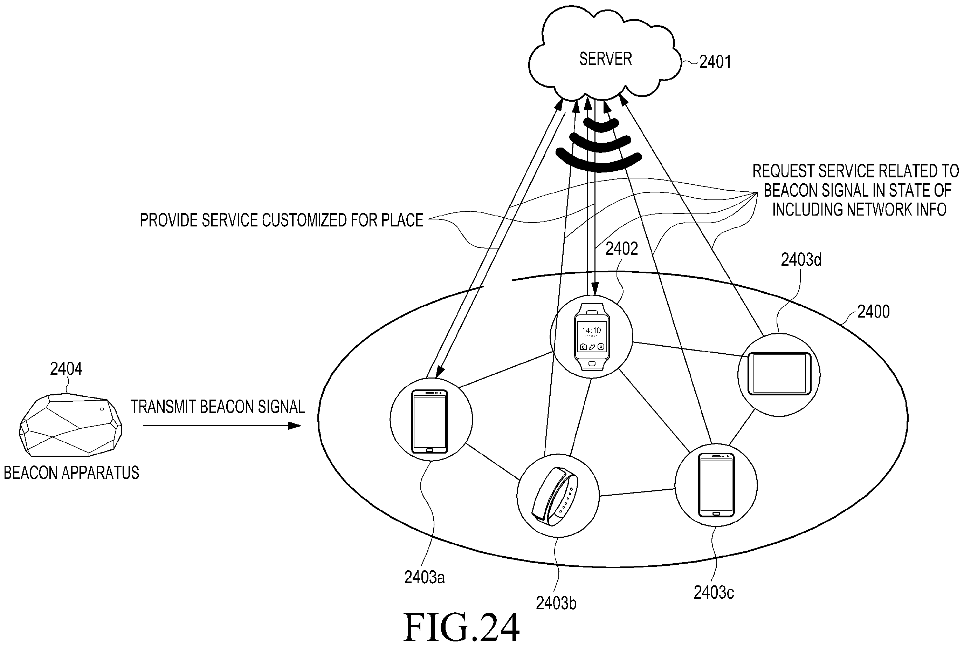

FIG. 24 is a view illustrating an example of a situation in which a service is provided among a server, an electronic apparatus, and a neighboring apparatus according to various embodiments of the present disclosure.

Referring to FIG. 24, a network environment for providing a service may include at least one of the server 2401, a short-range communication network 2400, and at least one beacon apparatus 2404.

The beacon apparatus 2404 may transmit a beacon signal. For example, the beacon signal may include information representing that the beacon apparatus 2404 is located at a particular place (e.g., a movie theater).

The short-range communication network 2400 may include the electronic apparatus 2402 and the at least one neighboring apparatus (e.g., a first smart watch 2403a, a tablet PC 2403b, a smart phone 2403c, and a second smart watch 2403d). For example, the electronic apparatus 2402 may serve as a master device of the short-range communication network 2400, and may be performing a game service with the at least one neighboring apparatus 2403a to 2403d.

In the short-range communication network 2400, the at least one electronic apparatus (e.g., the electronic apparatus 2402) may receive the beacon signal transmitted by the beacon apparatus 2404.

According to various embodiments of the present disclosure, the electronic apparatus 2402 serving as a master device may send, to the server, a request for a service related to information of the short-range communication network 2400 and related to a particular place included in the beacon signal.

In response to the request of the service, the server 2401 may provide the electronic apparatus 2402 with the service related to the beacon signal. For example, the electronic apparatus 2402 may transmit network information to the server, and accordingly, the service related to the beacon signal (i.e., the service provided by the server 2401) may include not only information that the electronic apparatus 2402 uses to control the network but also information capable of controlling the at least one electronic apparatus in the network.

According to various embodiments of the present disclosure, the beacon signal may include information on the particular place, and accordingly, the server 2401 may provide a service customized for a place to the at least one electronic apparatus within the short-range communication network 2400.

Since the service related to the beacon signal related to the particular place has been requested and thus a user of the electronic apparatus is determined as entering the place, the service customized for a place, according to various embodiments of the present disclosure, may include various services provided so as to be customized for the relevant place. For example, examples of the service customized for a place may include the transmission of advertisement information or coupon information related to the particular place, performing a control operation for setting a manner mode or a display for the electronic apparatus, and performing a control operation for stopping a service (e.g., a game service) which is currently being performed in the short-range communication network.

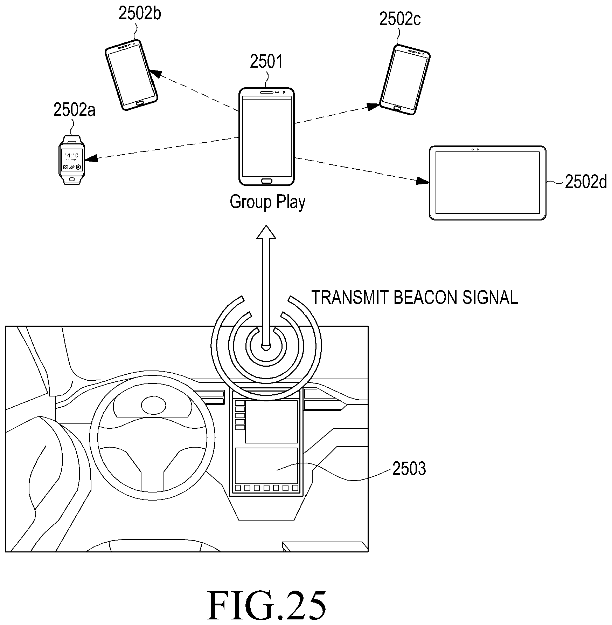

FIG. 25 is a view illustrating an example of a situation in which a service is provided between an electronic apparatus and a neighboring apparatus according to various embodiments of the present disclosure.

Referring to FIG. 25, a network environment for providing a service may include the at least one electronic apparatus that is connected through short-range communication within an automobile. For example, the network environment may include an electronic apparatus (e.g., an automobile 2503), an electronic apparatus (e.g., a smart phone 2501) of a user that is connected to the automobile 2503 through short-range communication, and at least one neighboring apparatus (e.g., a first smart watch 2502a, a first smart phone 2502b, a second smart phone 2502c, and a tablet PC 2502d) that is performing short-range communication with the electronic apparatus 2501.

According to various embodiments of the present disclosure, the automobile 2503 may include a communication module that transmits a beacon signal and an n-board diagnostics (OBD) module that checks an internal configuration. The automobile 2503 may include, in the beacon signal, information related to a driving mode of the automobile 2503 confirmed through the OBD module, and may transmit the beacon signal including the information.

For example, when the automobile 2503 expects power to be turned on/off through the OBD module because the automobile stalls or due to the consumption of a battery according to the current speed or location of the automobile, the automobile 2503 may transmit the received beacon signal to the at least one electronic apparatus.

The electronic apparatus 2501 may control the at least one neighboring apparatus (e.g., the neighboring apparatuses 2502a to 2502d) by using the transmitted beacon signal. For example, the electronic apparatus 2501 may configure a function of the at least one neighboring apparatus (e.g., the neighboring apparatuses 2502a to 2502d) by using the information related to the driving mode which is included in the transmitted beacon signal.

According to various embodiments of the present disclosure, when the automobile 2503 is running at a predetermined speed or more, the automobile 2503 may include speed information in a beacon signal, and may transmit the beacon signal including the speed information to the at least one electronic apparatus. For example, the electronic apparatus 2501, that receives the beacon signal, may transmit information related to the speed of the automobile or control information which configures a function according to the current speed, to the at least one neighboring apparatus (e.g., the neighboring apparatuses 2502a to 2502d).

According to various embodiments of the present disclosure, when the automobile 2503 is running at the predetermined speed or more, the electronic apparatus 2501 may determine that the user has difficulty in confirming a display unit of the automobile 2503, and may set a service related to a beacon signal so as to be provided to the electronic apparatus 2501 or the at least one neighboring apparatus (e.g., the neighboring apparatuses 2502a to 2502d). For example, the provided service may be provided on the basis of various sizes or resolutions according to function information (e.g., display information) of each electronic apparatus.

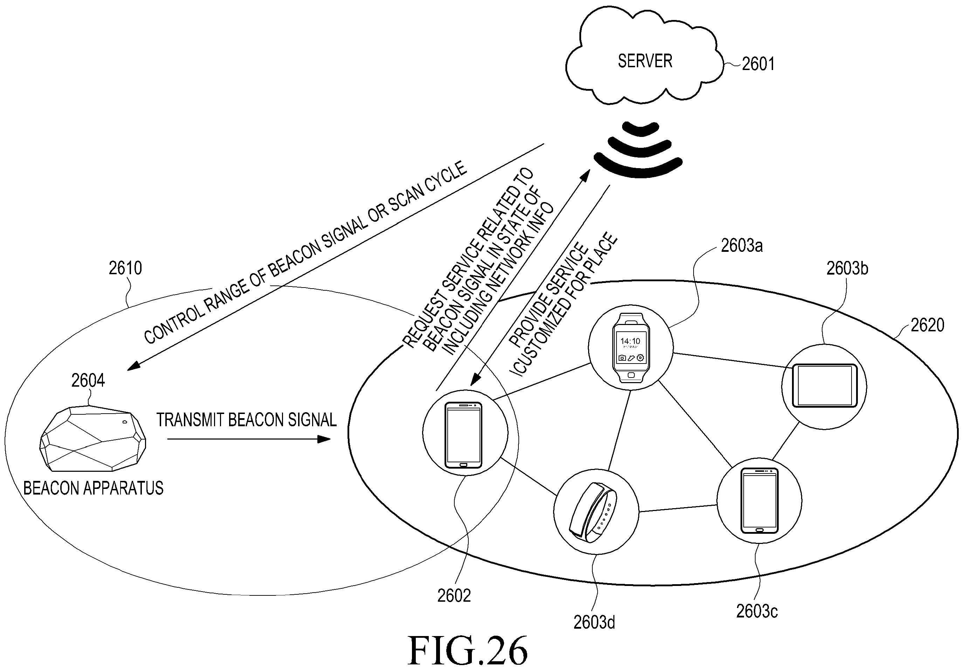

FIG. 26 is a view illustrating an example of a situation in which a service is provided among a server, an electronic apparatus, and a neighboring apparatus according to various embodiments of the present disclosure.

Referring to FIG. 26, a network environment 2610 for providing a service may include at least one of the server 2601, a short-range communication network 2620, and at least one beacon apparatus 2604.

The beacon apparatus 2604 may transmit a beacon signal. For example, the beacon signal may be a signal transmitted in order to measure the amount of exercise.

The short-range communication network 2620 may include the electronic apparatus 2602 and the at least one neighboring apparatus (e.g., a first smart watch 2603a, a tablet PC 2603b, a smart phone 2603c, and a second smart watch 2603d). For example, the electronic apparatus 2602 may be a master device of the short-range communication network 2620, and may include a speed sensor, a GPS module, and the like in order to measure the amount of exercise of a user.

When the electronic apparatus 2602 receives the beacon signal, the electronic apparatus 2602 may send, to the server 2601, a request for a service related to the beacon signal in a state of including information on the short-range communication network 2620.

According to various embodiments of the present disclosure, the server 2601 may provide the electronic apparatus 2602 with a service customized for a place, which is related to the short-range communication network 2620, on the basis of the network information. For example, a user of the electronic apparatus 2602 may be in a place related to exercise, and accordingly, the service customized for a place may provide information related to the relevant place.

According to various embodiments of the present disclosure, the server 2601 may receive the request for the service, and accordingly, may determine that the electronic apparatus 2602 is located within a range in which the electronic apparatus 2602 is capable of performing communication with the beacon apparatus 2604. For example, the server 2601 may set a transmission cycle of a beacon signal, a transmission range in which a beacon signal is capable of being transmitted, and the like for the beacon apparatus 2604.

According to various embodiments of the present disclosure, the electronic apparatus 2602 that serves as a master device may send, to the server 2601, a request for a service related to information of the short-range communication network 2620 and particular place information included in the beacon signal.

In response to the request for the service, the server 2601 may provide the electronic apparatus 2602 with the service related to the beacon signal. For example, the electronic apparatus 2602 may transmit network information to the server 2601, and accordingly, the service related to the beacon signal (i.e., the service provided by the server 2601) may include not only information that the electronic apparatus 2602 uses to control the network but also information capable of controlling the at least one electronic apparatus in the network.

According to various embodiments of the present disclosure, the beacon signal may include information on a particular place, and accordingly, the server 2601 may provide a service customized for a place to the at least one electronic apparatus within the short-range communication network 2620.

Since the service related to the beacon signal related to the particular place has been requested and thus a user of the electronic apparatus is determined as entering the place, the service customized for a place, according to various embodiments of the present disclosure, may include various services provided so as to be customized for the relevant place. For example, examples of the service customized for a place may include the transmission of advertisement information or coupon information related to the particular place, performing a control operation for setting a manner mode or a display for the electronic apparatus, and performing a control operation for stopping a service (e.g., a game service) which is currently being performed in the short-range communication network.

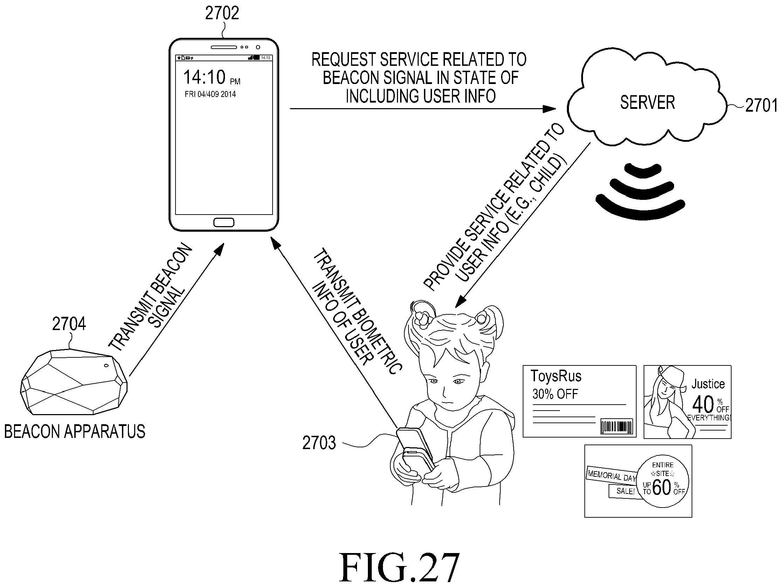

FIG. 27 is a view illustrating an example of a situation in which a service is provided among a server, an electronic apparatus, and a neighboring apparatus according to various embodiments of the present disclosure.

Referring to FIG. 27, a network environment for providing a service may include at least one of the server 2701, the electronic apparatus 2702, the at least one neighboring apparatus 2703, and a beacon apparatus 2704.

The beacon apparatus 2704 may transmit a beacon signal. For example, the beacon signal may include information related to a particular brand.

The electronic apparatus 2702 may receive the beacon signal transmitted by the at least one electronic apparatus (e.g., the beacon apparatus 2704).

The neighboring apparatus 2703 may transmit biometric information of a user to the electronic apparatus 2702. For example, the electronic apparatus 2702 may confirm data, which is output by a biometric sensor (e.g., an iris sensor, a pupil sensor, a voice recognition sensor, etc.) included in the neighboring apparatus 2703, or user information that the user directly inputs, and may analyze the information of the user of the relevant neighboring apparatus.

The electronic apparatus 2702 may receive the biometric information of the user, and may request a service related to the beacon signal with reference to the received biometric information.

The server 2701 may receive the request of the service from the electronic apparatus 2702, and may provide the service related to the beacon signal. For example, when the server 2701 receives, from the electronic apparatus 2702, information notifying that a user of a particular neighboring apparatus (e.g., the neighboring apparatus 2703) is a child, the server 2701 may transmit advertisement information or coupon information, which is related to children, to the electronic apparatus 2702 or an electronic apparatus (e.g., the neighboring apparatus 2703) which is surmised to be in a state of being used by the electronic apparatus 2702 or the child.

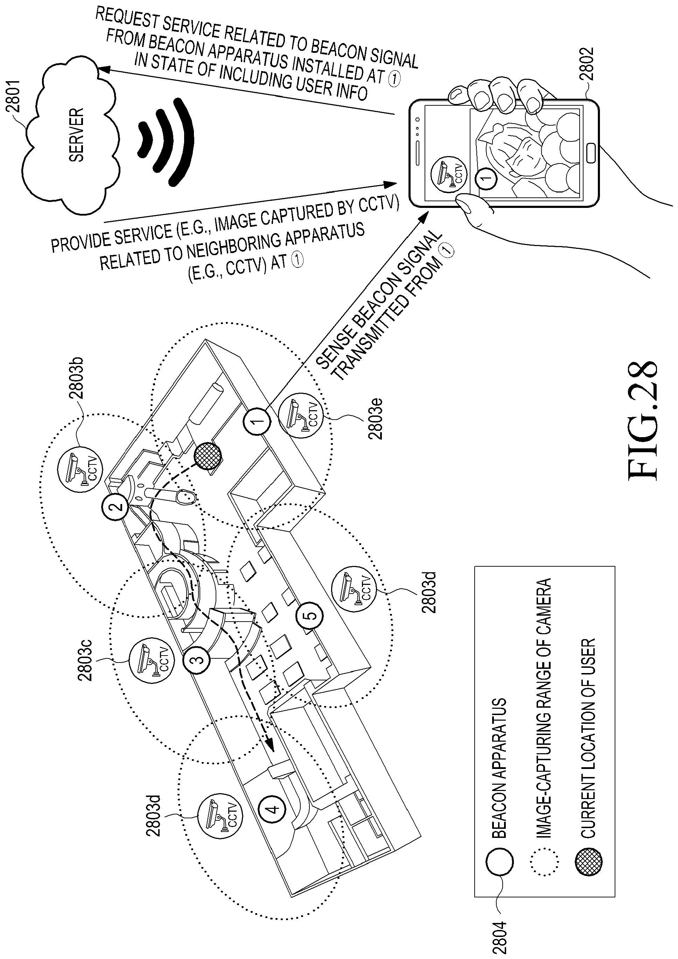

FIG. 28 is a view illustrating an example of a situation in which a service is provided among a server, an electronic apparatus, and a neighboring apparatus according to various embodiments of the present disclosure.

Referring to FIG. 28, a network environment for providing a service may include at least one of the server 2801, the electronic apparatus 2802, at least one neighboring apparatus (e.g., closed-circuit televisions (CCTVs) 2803a to 2803e), and at least one beacon apparatus 2804.

The at least one beacon apparatus 2804 may transmit a beacon signal. For example, the beacon signal may include information representing the location (e.g., ①, ②, ③, ④ or ⑤) of the relevant beacon apparatus.

The electronic apparatus 2802 may receive the beacon signal transmitted by the at least one electronic apparatus (e.g., the beacon apparatus 2804).

The neighboring apparatus 2803 may receive the beacon signal from the at least one beacon apparatus. The neighboring apparatus 2803 may transmit, to the electronic apparatus 2802, user information or information related to the received beacon signal. For example, the information related to the beacon signal transmitted to the electronic apparatus 2802 may include information representing that the beacon apparatus is a CCTV and information on the location of the relevant CCTV. The user information may be data, which is output by a biometric sensor (e.g., an iris sensor, a pupil sensor, a voice recognition sensor, etc.) included in the neighboring apparatus, or user information that the user directly inputs. The electronic apparatus 2802 may confirm the user information, and may analyze the information of the user of the relevant neighboring apparatus.

The electronic apparatus 2802 may request a service related to the user information received from the neighboring apparatus 2803 or the beacon apparatus 2804 installed at location ①.

The server 2801 may provide the service related to the beacon signal. For example, when the server 2801 confirms that the beacon signal is a signal transmitted by the CCTV, the server 2801 may provide the electronic apparatus 2802 with a service (e.g., an image captured by the CCTV) related to the CCTV 2803a installed at location ①.

According to various embodiments of the present disclosure, the electronic apparatus 2802 of a mother may be connected to an electronic apparatus (e.g., the neighboring apparatus 2803) of a child through short-range communication. Meanwhile, a case is considered in which the child gets lost and looks for his/her mother. At this time, the electronic apparatus of the child may transmit information related to a beacon signal transmitted by the neighboring beacon apparatus (e.g., the CCTV 2803a), to the electronic apparatus 2802 of the mother.

The electronic apparatus 2802 of the mother may send, to the server 2801, a request for information related to the beacon signal received from the electronic apparatus of the child. In response to the request, the server 2801 may confirm that the received beacon signal is related to a CCTV installed at a particular location (e.g., location ①), and may transmit an image, which is captured by the relevant CCTV, to the electronic apparatus 2802 of the mother.

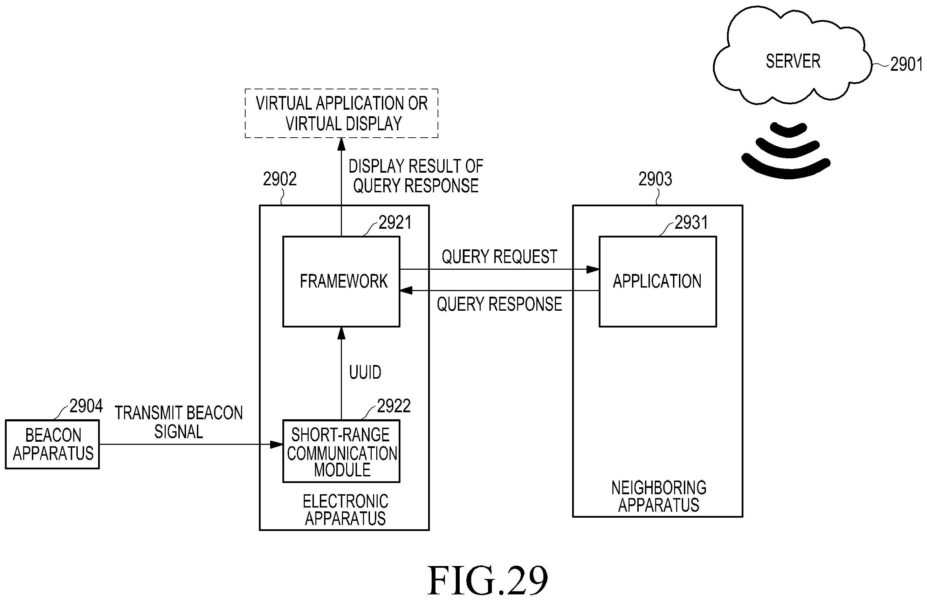

FIG. 29 is a view illustrating an example of a network environment including a server, an electronic apparatus, and a neighboring apparatus in order to provide a service according to various embodiments of the present disclosure.

Referring to FIG. 29, a network environment for providing a service may include the server 2901, the electronic apparatus 2902, the at least one neighboring apparatus 2903, and a beacon apparatus 2904.

The beacon apparatus 2904 may transmit a beacon signal.

The electronic apparatus 2902 may include a framework 2921 and a short-range communication module 2922.

Through the short-range communication module 2922, the electronic apparatus 2902 may receive the beacon signal, and may deliver UUID information included in the beacon signal to the framework 2921.

The framework 2921 may determine whether an application capable of processing a service related to the UUID information is included. When it is determined that the application capable of processing the service does not exist, the framework 2921 may send, to the neighboring apparatus 2903, a request for a query which requests the application capable of processing the service related to the UUID information. As a query response to the request for the query, the framework 2921 may receive information on whether the relevant application is included in the neighboring apparatus 2903.

The framework 2921 may provide a service related to the beacon signal. For example, the framework 2921 may process the service related to the beacon signal through a virtual application or a virtual display.

The at least one neighboring apparatus 2903 may include information on the at least one application 2931. For example, the at least one neighboring apparatus 2903 may process a particular service through the at least one application 2931.

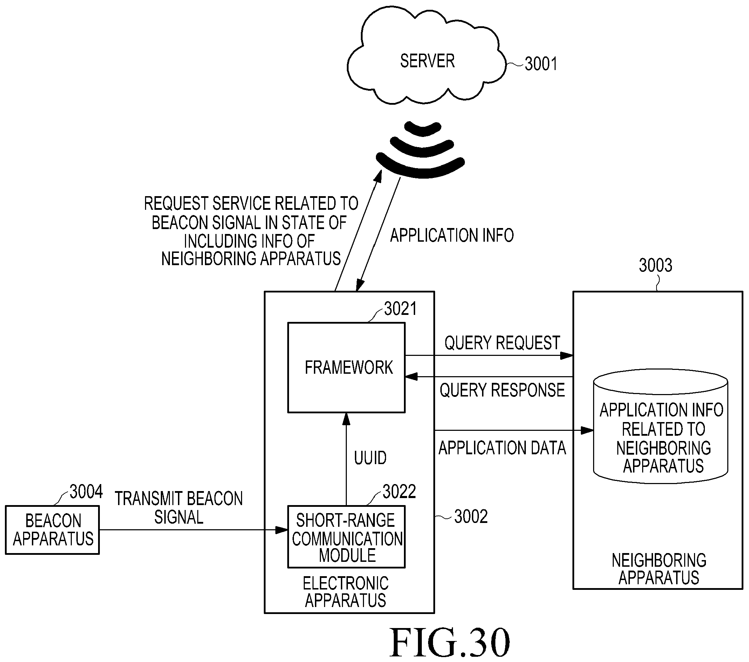

FIG. 30 is a view illustrating an example of a network environment including a server, an electronic apparatus, and a neighboring apparatus in order to provide a service according to various embodiments of the present disclosure.

Referring to FIG. 30, a network environment for providing a service may include the server 3001, the electronic apparatus 3002, the at least one neighboring apparatus 3003, and a beacon apparatus 3004.

The beacon apparatus 3004 may transmit a beacon signal.

The electronic apparatus 3002 may include a framework 3021 and a short-range communication module 3022.

Through the short-range communication module 3022, the electronic apparatus 3002 may receive the beacon signal, and may deliver UUID information included in the beacon signal to the framework 3021.

The framework 3021 may send, to the neighboring apparatus 3003, a request for a query in a state of including the UUID information. The request for the query may be to determine whether an application related to the UUID is included in the neighboring apparatus 3003.

According to various embodiments of the present disclosure, as a query response to the request for the query, the framework 3021 may recommend the application related to the UUID to the neighboring apparatus 3003. For example, when it is determined, through the query response, that the neighboring apparatus 3003 does not include the application related to the UUID, the framework 3021 may send, to the server 3001, a request for a service related to the beacon signal in a state of including information of the neighboring apparatus 3003.

In response to the request for the service, the server 3001 may provide the electronic apparatus 3002 with the service related to the beacon signal, or may transmit, to the electronic apparatus 3002, application information related to the UUID.

When the framework 3021 receives, from the server 3001, the application information related to the neighboring apparatus, the framework 3021 may transmit the received application information to the at least one neighboring apparatus 3003.

The at least one neighboring apparatus 3003 may store the application information related to the at least one neighboring apparatus.

According to various embodiments of the present disclosure, the electronic apparatus 3002 may determine whether the information related to the received beacon signal is included in the at least one neighboring apparatus 3003, and may recommend the service (or the application) related to the beacon signal on the basis of the information of the at least one neighboring apparatus 3003.

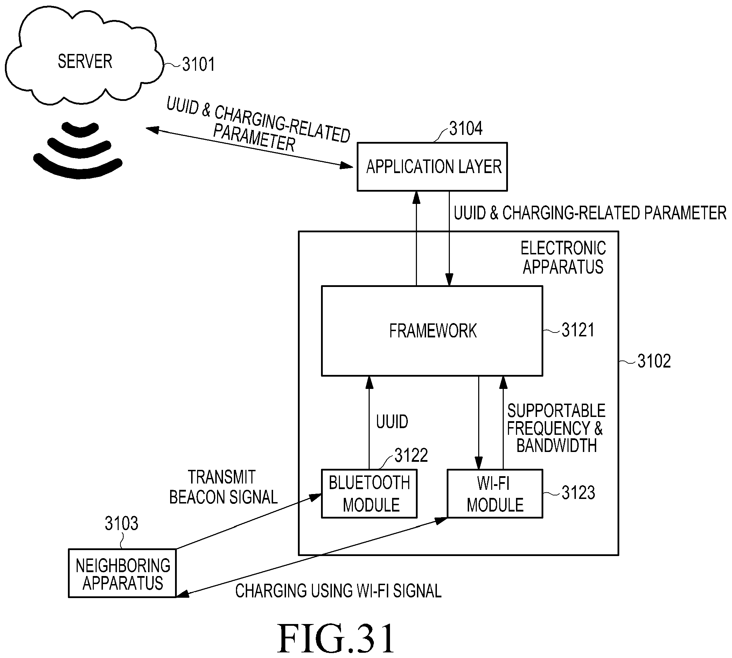

FIG. 31 is a view illustrating an example of a network environment including a server, an electronic apparatus, and a neighboring apparatus in order to provide a service according to various embodiments of the present disclosure.

Referring to FIG. 31, a network environment for providing a service may include the server 3101, the electronic apparatus 3102, the at least one neighboring apparatus 3103, and an application layer 3104.

The at least one neighboring apparatus 3103 may transmit a beacon signal. For example, the beacon signal may include UUID information of the neighboring apparatus 3103.

The at least one neighboring apparatus 3103 may wirelessly charge a battery of the electronic apparatus 3102 by using a Wi-Fi signal.

The electronic apparatus 3102 may include a framework 3121 and at least one short-range communication module (e.g., a Bluetooth module 3122 or a Wi-Fi module 3123).

The framework 3121 may receive UUID information of a particular electronic apparatus received through the Bluetooth module 3122. Also, the framework 3121 may receive information on a frequency or a bandwidth which is capable of supporting wireless charging through the Wi-Fi module 3123.

The framework 3121 may transmit, to the application layer 3104, the UUID or information (e.g., information on a frequency or bandwidth which is supportable) for acquiring a charging-related parameter which is received through the Bluetooth module 3122 or the Wi-Fi module 3123.

Through the application layer 3104, the server 3101 and the electronic apparatus 3102 may share UUID information of the particular neighboring apparatus or charging-related parameter.

According to various embodiments of the present disclosure, the electronic apparatus 3102 may acquire the charging-related parameter, and accordingly, the electronic apparatus 3102 together with the neighboring apparatus 3103 may perform wireless charging by using a Wi-Fi signal.

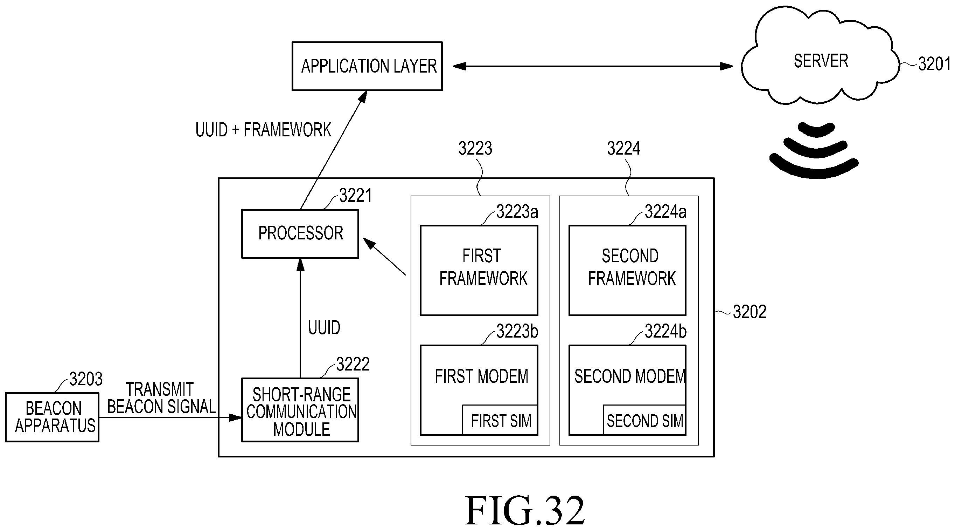

FIG. 32 is a view illustrating an example of a network environment including a server, an electronic apparatus, and a neighboring apparatus in order to provide a service according to various embodiments of the present disclosure.

Referring to FIG. 32, a network environment for providing a service may include the server 3201, the electronic apparatus 3202, and a beacon apparatus 3203.

The beacon apparatus 3203 may transmit a beacon signal. For example, the beacon signal may include UUID information of the beacon apparatus 3203.

The electronic apparatus 3202 may include a processor 3221, a short-range communication module 3222, and at least one communication module (e.g., a first communication module 3223 and a second communication module 3224).

The short-range communication module 3222 may receive the beacon signal transmitted by the at least one beacon apparatus. For example, the short-range communication module 3222 may confirm UUID information in the received beacon signal and may deliver the confirmed UUID information to the processor 3221.

The at least one communication module (e.g., the first communication module 3223 and the second communication module 3224) may perform communication in a frequency band different for each communication company. For example, the first communication module 3223 may include a first framework 3223a and a first modem 3223b, and the first modem 3223b may include a first SIM chip including identification information of the first communication module. The second communication module 3224 may include a second framework 3224a and a second modem 3224b, and the second modem 3224b may include a second SIM chip including identification information of the second communication module.

The processor 3221 may control an overall operation of the electronic apparatus 3202. For example, when the processor 3221 receives at least one piece of UUID information, the processor 3221 may transmit, to the server 3201, the UUID information and a framework (e.g., information on the first framework 3223a of the first communication module 3223) of a communication module that is currently providing a communication service.

According to various embodiments of the present disclosure, when it is determined that a state of communication performed through the first communication module 3223 is currently not good, the processor 3221 may transmit, to the server 3201, information on the second framework 3224a of another communication module (e.g., the second communication module 3224).

According to various embodiments of the present disclosure, the electronic apparatus 3202 may transmit, to the server, not only information on the communication module, that is currently providing a communication service, but also information on another communication module in which a communication service is not activated, and accordingly, the electronic apparatus 3202 may be handed over from a communication service through the first communication module 3223 to a communication service through the second communication module 3224.

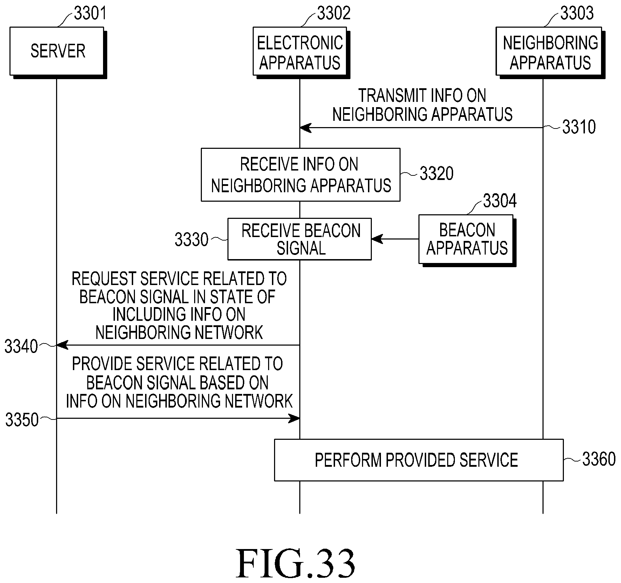

FIG. 33 is a signal flow diagram illustrating an example of a service providing operation flow among a server, an electronic apparatus, and a neighboring apparatus according to various embodiments of the present disclosure.

Referring to FIG. 33, in operation 3310, the neighboring apparatus 3303 may transmit information on the neighboring apparatus to the electronic apparatus 3302.

In operation 3320, the electronic apparatus 3302 may receive the information on the at least one neighboring apparatus, from the neighboring apparatus. For example, the information on the neighboring apparatus may include information on a neighboring network of the neighboring apparatus 3303.

According to various embodiments of the present disclosure, the electronic apparatus may receive a beacon signal from at least one beacon apparatus, and may then perform the operation of receiving the information on the neighboring apparatus.

In operation 3330, the electronic apparatus 3302 may receive a beacon signal generated by the at least one beacon apparatus 3304.

In operation 3340, the electronic apparatus 3302 may send, to the server 3301, a request for a service related to the received beacon signal in a state of including the information on the neighboring network.

In operation 3350, the server 3301 may receive the request for the service from the electronic apparatus 3302, and may provide the service to the electronic apparatus 3302 on the basis of the information on the neighboring network.

In operation 3360, the electronic apparatus 3302 may perform the provided service, and the service provided by the server 3301 may also be performed by the at least one neighboring apparatus 3303, according to the control of the electronic apparatus 3302.

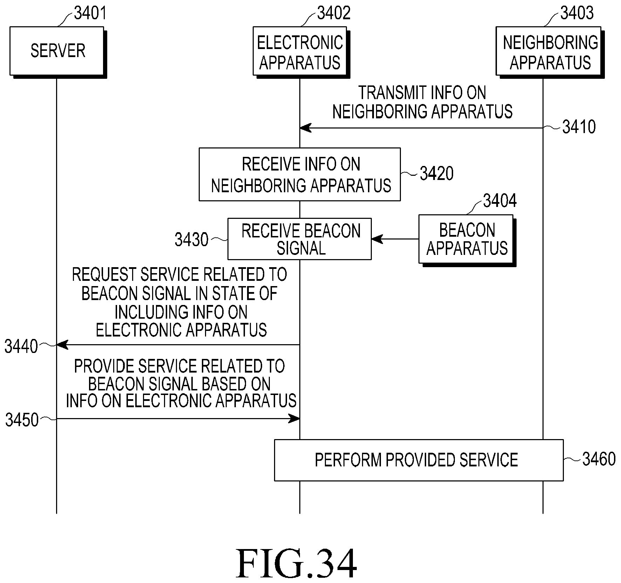

FIG. 34 is a signal flow diagram illustrating an example of a service providing operation flow among a server, an electronic apparatus, and a neighboring apparatus according to various embodiments of the present disclosure.

Referring to FIG. 34, in operation 3410, the neighboring apparatus 3403 may transmit information on the neighboring apparatus to the electronic apparatus 3402.

In operation 3420, the electronic apparatus 3402 may receive the information on the at least one neighboring apparatus, from the neighboring apparatus.

According to various embodiments of the present disclosure, the electronic apparatus may receive a beacon signal from at least one beacon apparatus, and may then perform the operation of receiving the information on the neighboring apparatus.

In operation 3430, the electronic apparatus 3402 may receive a beacon signal generated by the at least one beacon apparatus 3404.

In operation 3440, the electronic apparatus 3402 may send, to the server 3401, a request for a service related to the received beacon signal in a state of including the information on the electronic apparatus 3402.

In operation 3450, the server 3401 may provide the electronic apparatus 3402 with the service related to the beacon signal which is based on the information on the electronic apparatus 3402.

In operation 3460, the electronic apparatus 3402 may perform the provided service, and the service provided by the server 3401 may also be performed by the at least one neighboring apparatus 3403, according to the control of the electronic apparatus 3402.

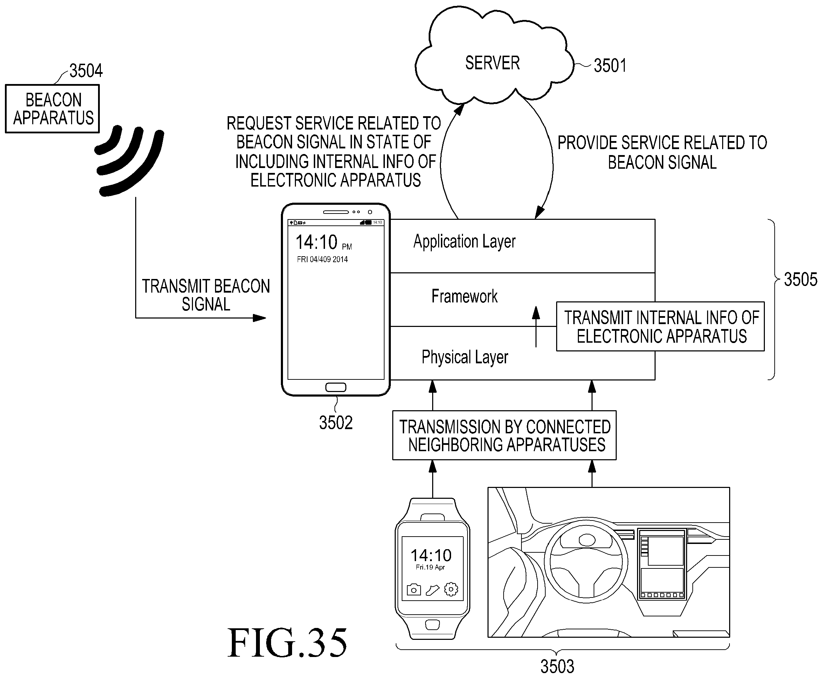

Examples of a service which may be received according to the transmission of internal information of the electronic apparatus or information on the neighboring apparatus will be described below with reference to FIG. 35.

FIG. 35 is a view illustrating an example of a situation in which a service is provided among a server, an electronic apparatus, and a neighboring apparatus according to various embodiments of the present disclosure.

Referring to FIG. 35, the beacon apparatus 3504 may transmit a beacon signal. For example, the beacon signal may include information notifying that the beacon apparatus is located at a particular shop (e.g., a restaurant).

The neighboring apparatus (e.g., an automobile) 3503 may transmit sensor information of the neighboring apparatus 3503 to the electronic apparatus 3502. For example, the sensor information may include information notifying that the number of persons who are currently getting in the automobile is two, which is sensed by a seat sensor of the automobile.

The electronic apparatus 3502 may request a service with reference to internal information of the electronic apparatus 3502. For example, the internal information may include information (e.g., date/time or place) on an application (e.g., a calendar application) installed in the electronic apparatus 3502.

Software 3505 that the electronic apparatus 3502 uses to perform a service providing operation may include an application layer, a framework, and a physical layer.

A service related to the internal information of the electronic apparatus 3502 may be provided to the neighboring apparatus 3503 through the application layer.

When the framework confirms the transmission of the beacon signal or the sensor information of the neighboring apparatus, the framework may send, to the server 3501, a request for a service related to the beacon signal in a state of including the sensor information of the neighboring apparatus.

The internal information of the electronic apparatus 3502, information on the beacon signal, the sensor information of the neighboring apparatus, or the like may be transmitted through the physical layer.

The server 3501 may receive the request for the service from the electronic apparatus 3502, and may provide the electronic apparatus 3502 with the service related to the beacon signal. For example, the service related to the beacon signal may be a service related to schedule information of a user which is acquired through a calendar application of the electronic apparatus 3502.

According to various embodiments of the present disclosure, the server 3501 may confirm the schedule information of the user, and may provide the neighboring apparatus 3503 with a service related to a particular place when it is confirmed that the user is in the particular place on a particular date.

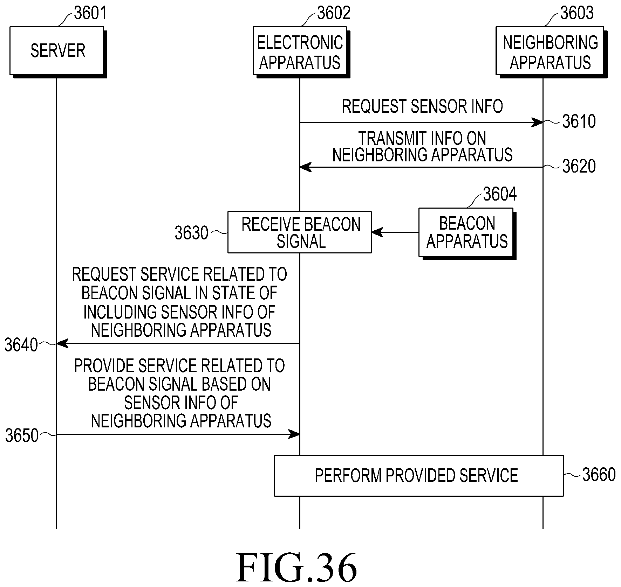

FIG. 36 is a signal flow diagram illustrating an example of a service providing operation flow among a server, an electronic apparatus, and a neighboring apparatus according to various embodiments of the present disclosure.

Referring to FIG. 36, in operation 3610, the electronic apparatus 3602 may send, to the neighboring apparatus 3603, a request for sensor information (e.g., information related to a speed sensor). For example, the sensor information may include information related to data which is output by at least one sensor included in the neighboring apparatus 3603.

In operation 3620, the neighboring apparatus 3603 may transmit information on the neighboring apparatus to the electronic apparatus 3602.

In operation 3630, the electronic apparatus 3602 may receive the information on the at least one neighboring apparatus, from the neighboring apparatus.

According to various embodiments of the present disclosure, the electronic apparatus may receive a beacon signal from at least one beacon apparatus 3604, and may then perform the operation of receiving the information on the neighboring apparatus.

In operation 3640, the electronic apparatus 3602 may send, to the server 3601, a request for a service related to the beacon signal with reference to the received sensor information of the neighboring apparatus.

In operation 3650, the server 3601 may receive the request for the service from the electronic apparatus 3602, and may provide the service related to the beacon signal to the electronic apparatus 3602 on the basis of the sensor information of the neighboring apparatus.

In operation 3660, the electronic apparatus 3602 may perform the provided service, and the service provided by the server 3601 may also be performed by the at least one neighboring apparatus 3603, according to the control of the electronic apparatus 3602.

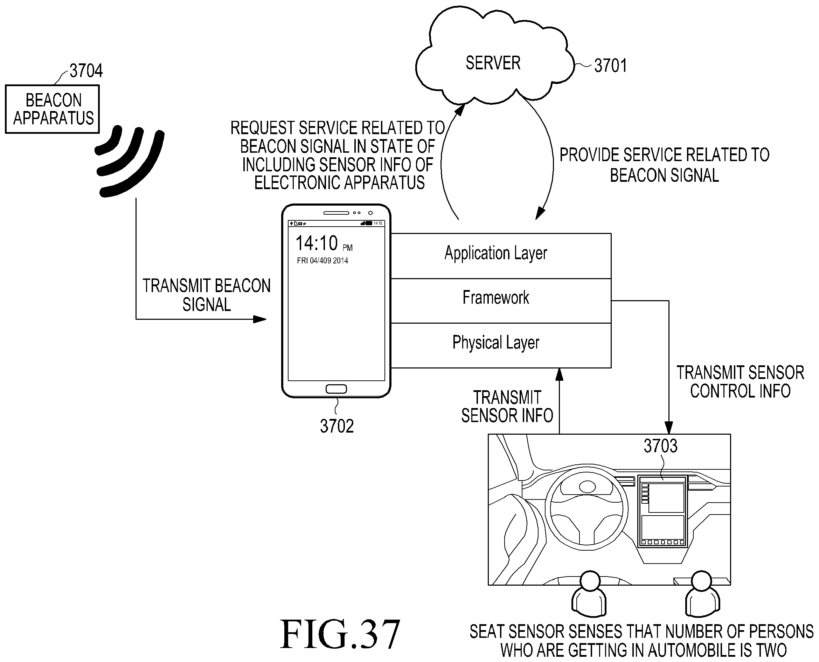

Examples of a service which may be received according to the sensor information of the neighboring apparatus will be described below with reference to FIG. 37.

FIG. 37 is a view illustrating an example of a situation in which a service is provided among a server, an electronic apparatus, and a neighboring apparatus according to various embodiments of the present disclosure.

Referring to FIG. 37, the beacon apparatus 3704 may transmit a beacon signal. For example, the beacon signal may include information notifying that the beacon apparatus is located at a particular shop (e.g., a restaurant).

The neighboring apparatus (e.g., an automobile) 3703 may transmit sensor information of the neighboring apparatus 3703 to the electronic apparatus 3702. For example, the sensor information may include information notifying that the number of persons who are currently getting in the automobile is two, which is sensed by a seat sensor of the automobile.

Software that the electronic apparatus 3702 uses to perform a service providing operation may include an application layer, a framework, and a physical layer.

When the framework confirms the transmission of the beacon signal or the sensor information of the neighboring apparatus, the framework may send, to the server 3701, a request for a service related to the beacon signal in a state of including the sensor information of the neighboring apparatus.

The server 3701 may provide the service related to the beacon signal. For example, the service related to the beacon signal may be a service which controls an application of the neighboring apparatus.

According to various embodiments of the present disclosure, the framework may confirm information on the number of persons, who are currently getting in the automobile, in the sensor information of the neighboring apparatus, and may set the inside temperature of the automobile, according to the information on the number of persons who are currently getting in the automobile. For example, the sensor information may be transmitted to an application of the neighboring apparatus 3703 through the application layer, and an application for adjusting the inside temperature of the automobile may be controlled.

According to various embodiments of the present disclosure, the electronic apparatus may transmit sensor information of the neighboring apparatus to the server, and the server may provide a service related to the beacon signal on the basis of the sensor information of the neighboring apparatus. Accordingly, without performing an operation in which a user directly sets the inside temperature of the automobile, the inside temperature of the automobile may be set according to sensor control information provided by the server.

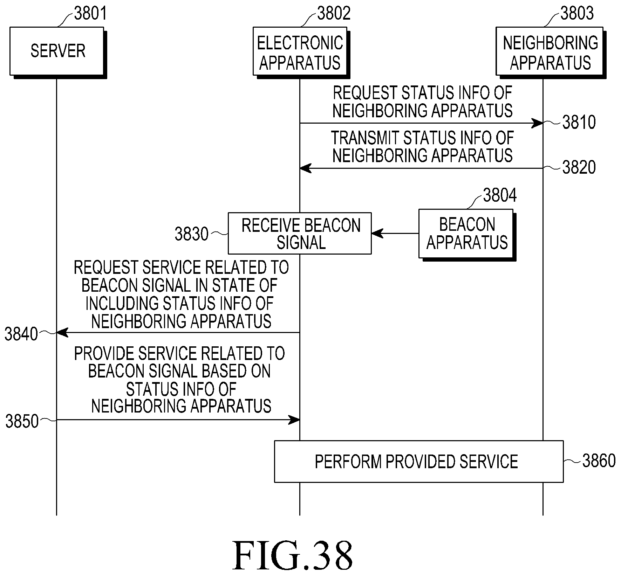

FIG. 38 is a signal flow diagram illustrating an example of a service providing operation flow among a server, an electronic apparatus, and a neighboring apparatus according to various embodiments of the present disclosure.

Referring to FIG. 38, in operation 3810, the electronic apparatus 3802 may send a request for status information of the at least one neighboring apparatus, to the neighboring apparatus 3803.

In operation 3820, the neighboring apparatus 3803 may transmit status information of the neighboring apparatus to the electronic apparatus 3802.

In operation 3830, the electronic apparatus 3802 may receive a beacon signal generated by at least one beacon apparatus 3804.

In operation 3840, the electronic apparatus 3802 may send, to the server 3801, a request for a service related to the received beacon signal in a state of including the status information of the neighboring apparatus.

In operation 3850, the server 3801 may provide the service related to the beacon signal to the electronic apparatus 3802 on the basis of the status information of the neighboring apparatus.

In operation 3860, the electronic apparatus 3802 may perform the provided service, and the service provided by the server 3801 may also be performed by the at least one neighboring apparatus 3803, according to the control of the electronic apparatus 3802.

According to various embodiments of the present disclosure, when the electronic apparatus is not capable of confirming information on the at least one neighboring apparatus, the electronic apparatus may send a request for status information to the at least one neighboring apparatus.

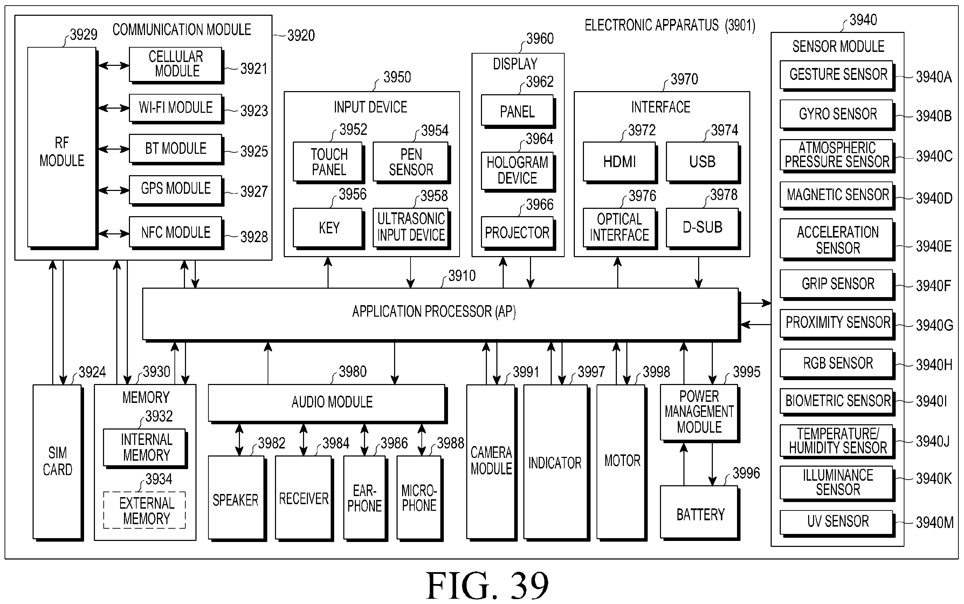

FIG. 39 is a block diagram illustrating an example of a configuration of an electronic apparatus according to various embodiments of the present disclosure. For example, the electronic apparatus 3901 may include the whole or part of the electronic apparatus 101 illustrated in FIG. 1.

Referring to FIG. 39, the electronic apparatus 3901 may include at least one AP (e.g., the processor 120 or an AP 3910), a communication module 3920, a subscriber identification module card 3924, a memory 3930, a sensor module 3940, an input device 3950, a display 3960, an interface 3970, an audio module 3980, a camera module 3991, a power management module 3995, a battery 3996, an indicator 3997, and a motor 3998.

The AP 3910 may control multiple hardware or software elements connected to the AP 3910 by running, for example, an OS or an application program, and may perform the processing of and arithmetic operations on various data. The AP 3910 may be implemented by, for example, a system on chip (SoC). According to an embodiment of the present disclosure, the AP 3910 may further include a GPU and/or an image signal processor. The AP 3910 may include at least some (e.g., a cellular module 3921) of the elements illustrated in FIG. 39. The AP 3910 may load, into a volatile memory, instructions or data received from at least one (e.g., a non-volatile memory) of the other elements and may process the loaded instructions or data, and may store various data in a non-volatile memory.

According to various embodiments of the present disclosure, when the AP 3910 receives at least one beacon signal from at least one beacon apparatus through the cellular module 3921, the AP 3910 may control a service related the beacon signal on the basis of information on at least one neighboring apparatus. For example, the AP 3910 may send, to a server (e.g., the server 106), a request for a service related the beacon signal, and may control the at least one neighboring apparatus by using the service related the beacon signal which is received from the server in response to the request.

For example, the information on the at least one neighboring apparatus, according to various embodiments of the present disclosure, may include at least one piece of information among display information, communication information, service-available information, sensor information, and service-available time information.

According to various embodiments of the present disclosure, the AP 3910 may transmit, to the server, display information on the at least one neighboring apparatus, and may receive, from the server, a service processed based on the display information.

According to various embodiments of the present disclosure, the AP 3910 may transmit, to the server, communication information on the at least one neighboring apparatus, and may receive, from the server, a service in a frequency band corresponding to the communication information.

According to various embodiments of the present disclosure, the AP 3910 may determine whether a request for the service related to the beacon signal is sent to the server, on the basis of service-available information on the at least one neighboring apparatus when the service-available information is received.

According to various embodiments of the present disclosure, the AP 3910 may perform a control operation for transmitting, to the server, service-available time information on the at least one neighboring apparatus, and receiving, from the server, the service related to the beacon signal which corresponds to the service-available time information.

According to various embodiments of the present disclosure, the AP 3910 may perform a control operation for transmitting, to the server, information on at least one sensor of the at least one neighboring apparatus, and receiving, from the server, information for controlling the at least one neighboring apparatus, on the basis of data from the at least one sensor.

According to various embodiments of the present disclosure, the AP 3910 may perform a control operation for transmitting, to the server, information on a network including the electronic apparatus, and receiving, from the server, a service related to at least one electronic apparatus included in the network.

According to various embodiments of the present disclosure, the AP 3910 may perform a control operation for transmitting, to the server, information on the at least one neighboring apparatus previously connected to the electronic apparatus, and receiving, from the server, a service related to the previously-connected at least one neighboring apparatus.

According to various embodiments of the present disclosure, the AP 3910 may perform a control operation for receiving, from the server, security information for communicating with the server and the at least one neighboring apparatus.

The communication module 3920 may have a configuration identical or similar to that of the communication interface 170 illustrated in FIG. 1. The communication module 3920 may include, for example, the cellular module 3921, a Wi-Fi module 3923, a bluetooth (BT) module 3925, a GPS module 3927, a near-field communication (NFC) module 3928, and a radio frequency (RF) module 3929.

According to various embodiments of the present disclosure, the communication module 3920 may send, to the server (e.g., the server 106), a request for a service in a state of including information on the at least one neighboring apparatus. The information on the at least one neighboring apparatus may include at least one piece of information among display information, communication information, service-available information, sensor information, and service-available time information.

According to various embodiments of the present disclosure, the communication module 3920 may transmit, to the server (e.g., the server 106), display information on the at least one neighboring apparatus, and may receive, from the server, a service processed based on the display information.

According to various embodiments of the present disclosure, the communication module 3920 may transmit, to the server, communication information on the at least one neighboring apparatus, and may receive, from the server, a service in a frequency band corresponding to the communication information.

According to various embodiments of the present disclosure, the communication module 3920 may send, to the server, a request for the service related to the beacon signal on the basis of service-available information on the at least one neighboring apparatus when the service-available information is received.

According to various embodiments of the present disclosure, the communication module 3920 may transmit, to the server, service-available time information on the at least one neighboring apparatus, and may receive, from the server, the service related to the beacon signal which corresponds to the service-available time information.

According to various embodiments of the present disclosure, the communication module 3920 may transmit, to the server, information on at least one sensor of the at least one neighboring apparatus, and may receive, from the server, information for controlling the at least one neighboring apparatus, on the basis of data from the at least one sensor.

According to various embodiments of the present disclosure, the communication module 3920 may transmit, to the server, information on a network including the electronic apparatus, and may receive, from the server, a service related to at least one electronic apparatus included in the network.

According to various embodiments of the present disclosure, the communication module 3920 may transmit, to the server, information on the at least one neighboring apparatus previously connected to the electronic apparatus, and may receive, from the server, a service related to the previously-connected at least one neighboring apparatus.

According to various embodiments of the present disclosure, the communication module 3920 may receive, from the server, security information for communicating with the server and the at least one neighboring apparatus.

For example, the cellular module 3921 may provide a voice call, an image call, a text message service, an Internet service, and the like through a communication network. According to an embodiment of the present disclosure, the cellular module 3921 may identify or authenticate an electronic apparatus 3901 in the communication network by using the subscriber identification module (e.g., a subscriber identity module (SIM) card) 3924. According to an embodiment of the present disclosure, the cellular module 3921 may perform at least some of the functions that the AP 3910 may provide. According to an embodiment of the present disclosure, the cellular module 3921 may include a CP.

Each of the Wi-Fi module 3923, the BT module 3925, the GPS module 3927, and the NFC module 3928 may include, for example, a processor for processing data transmitted and received through the relevant module. According to some embodiments of the present disclosure, at least some (e.g., two or more) of the cellular module 3921, the Wi-Fi module 3923, the BT module 3925, the GPS module 3927, and the NFC module 3928 may be included in one integrated chip (IC) or IC package.

The RF module 3929 may transmit and receive, for example, communication signals (e.g., RF signals). The RF module 3929 may include, for example, a transceiver, a power amplifier module (PAM), a frequency filter, a low noise amplifier (LNA), and an antenna. According to another embodiment of the present disclosure, at least one of the cellular module 3921, the Wi-Fi module 3923, the BT module 3925, the GPS module 3927, and the NFC module 3928 may transmit and receive RF signals through a separate RF module.

The SIM card 3924 may include, for example, a card including a subscriber identity module and/or an embedded SIM, and may contain unique identification information (e.g., an integrated circuit card identifier (ICCID)) or subscriber information (e.g., an international mobile subscriber identity (IMSI)).

The memory 3930 (e.g., the memory 130) may include, for example, an internal memory 3932 or an external memory 3934. The internal memory 3932 may include at least one of, for example, a volatile memory (e.g., a dynamic random access memory (DRAM), a static RAM (SRAM), a synchronous DRAM (SDRAM), etc.); a non-volatile memory (e.g., a one time programmable read-only memory (OTPROM), a programmable ROM (PROM), an erasable and programmable ROM (EPROM), an electrically erasable and programmable ROM (EEPROM), a mask ROM, a flash ROM, a flash memory (e.g., a Not AND (NAND) flash memory, a Not OR (NOR) flash memory, etc.), a hard drive, and a solid state drive (SSD).

The external memory 3934 may further include a flash drive, for example, a compact flash (CF), a secure digital (SD), a micro-secure digital (Micro-SD), a mini-secure digital (Mini-SD), an extreme digital (xD), a memory stick, or the like. The external memory 3934 may be functionally and/or physically connected to the electronic apparatus 3901 through various interfaces.

For example, the sensor module 3940 may measure a physical quantity or may detect an operation state of the electronic apparatus 3901, and may convert the measured physical quantity or the detected operation state into an electrical signal. The sensor module 3940 may include at least one of, for example, a gesture sensor 3940A, a gyro sensor 3940B, an atmospheric pressure sensor 3940C, a magnetic sensor 3940D, an acceleration sensor 3940E, a grip sensor 3940F, a proximity sensor 3940G, a color sensor 3940H (e.g., a red-green-blue (RGB) sensor), a biometric sensor 3940I, a temperature/humidity sensor 3940J, an illuminance sensor 3940K, and an Ultraviolet (UV) sensor 3940M. Additionally or alternatively, the sensor module 3940 may include, for example, an E-nose sensor, an electromyography (EMG) sensor, an electroencephalogram (EEG) sensor, an electrocardiogram (ECG) sensor, an infrared (IR) sensor, an iris sensor, and/or a fingerprint sensor. The sensor module 3940 may further include a control circuit for controlling one or more sensors included therein. In some embodiments of the present disclosure, the electronic apparatus 3901 may further include a processor configured to control the sensor module 3940 as a part of or separately from the AP 3910, and may control the sensor module 3940 while the AP 3910 is in a sleep state.

The input device 3950 may include, for example, a touch panel 3952, a (digital) pen sensor 3954, a key 3956, and an ultrasonic input unit 3958. The touch panel 3952 may use at least one of, for example, a capacitive scheme, a resistive scheme, an infrared scheme, and an acoustic wave scheme. Also, the touch panel 3952 may further include a control circuit. The touch panel 3952 may further include a tactile layer and may provide a tactile response to the user.

The (digital) pen sensor 3954 may include, for example, a recognition sheet which is a part of the touch panel or is separated from the touch panel. The key 3956 may be, for example, a physical button, an optical key, and a keypad. The ultrasonic input unit 3958 may sense an ultrasonic wave by using a microphone (e.g., the microphone 3988) in the electronic apparatus 3901, from an input means that generates an ultrasonic signal, and may confirm data corresponding to the sensed ultrasonic wave.

The display 3960 (e.g., the display 160) may include a panel 3962, a hologram unit 3964, and a projector 3966. The panel 3962 may include a configuration identical or similar to that of the display 160 illustrated in FIG. 1. The panel 3962 may be implemented to be, for example, flexible, transparent, or wearable. The panel 3962 and the touch panel 3952 may be implemented as one module. The hologram unit 3964 may display a three-dimensional image in the air by using the interference of light. The projector 3966 may display an image by projecting light onto a screen. The screen may be located, for example, inside or outside the electronic apparatus 3901. According to an embodiment of the present disclosure, the display 3960 may further include a control circuit for controlling the panel 3962, the hologram unit 3964, or the projector 3966.

The interface 3970 may include, for example, a HDMI 3972, a universal serial bus (USB) 3974, an optical interface 3976, and a D-subminiature (D-sub) 3978. The interface 3970 may be included in, for example, the communication interface 170 illustrated in FIG. 1. Additionally or alternatively, the interface 3970 may include, for example, a mobile high-definition link (MHL) interface, a SD card/multi-media card (MMC) interface, or an infrared data association (IrDA) standard interface.

For example, the audio module 3980 may bidirectionally convert between a sound and an electrical signal. At least some elements of the audio module 3980 may be included in, for example, the input/output interface 150 illustrated in FIG. 1. The audio module 3980 may process sound information which is input or output through, for example, a speaker 3982, a receiver 3984, an earphone 3986, the microphone 3988, or the like.

The camera module 3991 is, for example, a device capable of capturing a still image and a moving image. According to an embodiment of the present disclosure, the camera module 3991 may include one or more image sensors (e.g., a front sensor or a back sensor), a lens, an image signal processor (ISP), and a flash (e.g., an LED, a xenon lamp, or the like).

The power management module 3995 may manage, for example, power of the electronic apparatus 3901. According to an embodiment of the present disclosure, the power management module 3995 may include a power management integrated circuit (PMIC), a charger IC, or a battery fuel gauge. The PMIC may use a wired and/or wireless charging method. Examples of the wireless charging method may include, for example, a magnetic resonance method, a magnetic induction method, an electromagnetic method, and the like. Additional circuits (e.g., a coil loop, a resonance circuit, a rectifier, etc.) for wireless charging may be further included. The battery fuel gauge may measure, for example, a residual quantity of the battery 3996, and a voltage, a current, or a temperature during the charging. Examples of the battery 3996 may include a rechargeable battery and a solar battery.

The indicator 3997 may display a particular state (e.g., a booting state, a message state, a charging state, or the like) of the electronic apparatus 3901 or a part (e.g., the AP 3910) of the electronic apparatus 3901. The motor 3998 may convert an electrical signal into mechanical vibration, and may generate vibration, a haptic effect, or the like. Although not illustrated, the electronic apparatus 3901 may include a processing unit (e.g., a GPU) for supporting a mobile television (TV). The processing unit for supporting a mobile TV may process media data according to a standard, such as, for example, digital multimedia broadcasting (DMB), digital video broadcasting (DVB), or media flow.

Each of the components of the electronic device according to the present disclosure may be implemented by one or more components and the name of the corresponding component may vary depending on a type of the electronic device. The electronic device according to various embodiments of the present disclosure may include at least one of the above described elements and may exclude some of the elements or further include other additional elements. Further, some of the elements of the electronic device according to various embodiments of the present disclosure may be coupled to form a single entity while performing the same functions as those of the corresponding elements before the coupling.

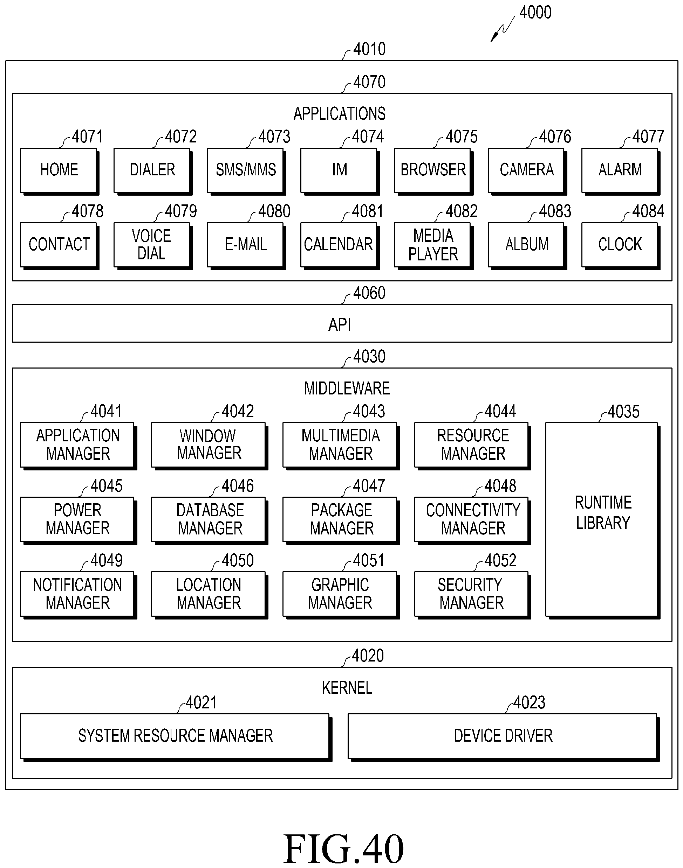

FIG. 40 is a block diagram 4000 illustrating an example of a configuration of a program module according to various embodiments of the present disclosure.

According to various embodiments of the present disclosure, the program module 4010 (e.g., the program 140) may include an OS for controlling resources related to the electronic apparatus (e.g., the electronic apparatus 101) and/or various applications (e.g., the application programs 147) executed in the OS. The OS may be, for example, Android, iOS, Windows, Symbian, Tizen, Bada, and the like.

Referring to FIG. 40, the program module 4010 may include a kernel 4020, middleware 4030, an API 4060, and/or an application 4070. At least some of the program module 4010 may be preloaded on the electronic apparatus, or may be downloaded from a server (e.g., the server 106).

The kernel 4020 (e.g., the kernel 141 illustrated in FIG. 1) may include, for example, a system resource manager 4021 and/or a device driver 4023. The system resource manager 4021 may perform the control, allocation, retrieval, or the like of system resources. According to an embodiment of the present disclosure, the system resource manager 4021 may include a process manager, a memory manager, a file system manager, or the like. The device driver 4023 may include, for example, a display driver, a camera driver, a Bluetooth driver, a shared memory driver, a USB driver, a keypad driver, a Wi-Fi driver, an audio driver, or an inter-process communication (IPC) driver.

For example, the middleware 4030 may provide a function used in common by the applications 4070, or may provide various functions to the applications 4070 through the API 4060 so as to enable the applications 4070 to efficiently use the limited system resources within the electronic apparatus. According to an embodiment of the present disclosure, the middleware 4030 (e.g., the middleware 143) may include at least one of a runtime library 4035, an application manager 4041, a window manager 4042, a multimedia manager 4043, a resource manager 4044, a power manager 4045, a database manager 4046, a package manager 4047, a connectivity manager 4048, a notification manager 4049, a location manager 4050, a graphic manager 4051, and a security manager 4052.

The runtime library 4035 may include, for example, a library module that a complier uses to add a new function by using a programming language during the execution of the application 4070. The runtime library 4035 may perform input/output management, memory management, the functionality for an arithmetic function, or the like.

The application manager 4041 may manage, for example, the life cycle of at least one of the applications 4070. The window manager 4042 may manage graphical user interface (GUI) resources used for the screen. The multimedia manager 4043 may determine a format used to reproduce various media files, and may encode or decode a media file by using a coder/decoder (codec) appropriate for the relevant format. The resource manager 4044 may manage resources, such as a source code, a memory, a storage space, and the like of at least one of the applications 4070.

For example, the power manager 4045 may operate together with a basic input/output system (BIOS), etc. and may manage a battery or power, and may provide power information and the like used for an operation of the electronic apparatus. The database manager 4046 may generate, search for, and/or change a database to be used by at least one of the applications 4070. The package manager 4047 may manage the installation or update of an application distributed in the form of a package file.

The connectivity manager 4048 may manage a wireless connection such as, for example, Wi-Fi or Bluetooth. The notification manager 4049 may display or notify of an event, such as an arrival message, an appointment, a proximity notification, and the like, in such a manner as not to disturb the user. The location manager 4050 may manage location information of the electronic apparatus. The graphic manager 4051 may manage a graphic effect, which is to be provided to the user, or a user interface related to the graphic effect. The security manager 4052 may provide various security functions used for system security, user authentication, and the like. According to an embodiment of the present disclosure, when the electronic apparatus (e.g., the electronic apparatus 101) has a telephone call function, the middleware 4030 may further include a telephony manager for managing a voice call function or a video call function of the electronic apparatus.

The middleware 4030 may include a middleware module that forms a combination of various functions of the above-described elements. The middleware 4030 may provide a module specialized for each type of OS in order to provide a differentiated function. Also, the middleware 4030 may dynamically delete some of the existing elements, or may add new elements.

The API 4060 (e.g., the API 145) is, for example, a set of API programming functions, and may be provided with a different configuration according to an OS. For example, in the case of Android or iOS, one API set may be provided for each platform. In the case of Tizen, two or more API sets may be provided for each platform.

The applications 4070 (e.g., the application programs 147) may include one or more applications capable of performing functions, such as, for example, a home 4071, a dialer 4072, an SMS/MMS 4073, an instant message (IM) 4074, a browser 4075, a camera 4076, an alarm 4077, a contact 4078, a voice dialer 4079, an email 4080, a calendar 4081, a media player 4082, an album 4083, a clock 4084, health care (e.g., which measures an exercise quantity, a blood sugar level, or the like), and providing of environmental information (e.g., information on atmospheric pressure, humidity, temperature, or the like).

According to an embodiment of the present disclosure, the applications 4070 may include an application (hereinafter, referred to as an "information exchange application" for convenience of description) supporting information exchange between the electronic apparatus (e.g., the electronic apparatus 101) and an external electronic apparatus (e.g., the beacon apparatus 102 or the neighboring apparatus 103). Examples of the information exchange application may include a notification relay application for delivering particular information to an external electronic apparatus and a device management application for managing an external electronic apparatus.

For example, the notification relay application may include a function of delivering, to the external electronic apparatus (e.g., the beacon apparatus 102 or the neighboring apparatus 103), notification information generated by other applications (e.g., an SMS/MMS application, an email application, a health care application, an environmental information application, etc.) of the electronic apparatus 101. Also, for example, the notification relay application may receive notification information from the external electronic apparatus and may provide the received notification information to the user. The device management application may manage (e.g., install, delete, or update), for example, at least one function (e.g., turning on/off the external electronic apparatus itself (or some component parts thereof) or adjusting the brightness (or resolution) of the display) of the external electronic apparatus (e.g., the beacon apparatus 102 or the neighboring apparatus 103) communicating with the electronic apparatus, an application executed in the external electronic apparatus, or a service (e.g., a telephone call service, a message service, or the like) provided by the electronic apparatus.

According to an embodiment of the present disclosure, the application 4070 may include an application (e.g., a health care application) designated according to an attribute (e.g., which is an attribute of an electronic apparatus, and the type of electronic apparatus is a mobile medical device) of the external electronic apparatus (e.g., the beacon apparatus 102 or the neighboring apparatus 103). According to an embodiment of the present disclosure, the application 4070 may include an application received from the external electronic apparatus (e.g., the server 106, or the beacon apparatus 102 or the neighboring apparatus 103). According to an embodiment of the present disclosure, the application 4070 may include a preloaded application or a third party application which can be downloaded from the server. The names of the components of the program module 4010 of the illustrated embodiment of the present disclosure may be changed according to the type of operating system.

According to various embodiments of the present disclosure, at least some of the program module 4010 may be embodied as software, firmware, hardware, or a combination of at least two of them. At least some of the program module 4010 may be implemented (for example, executed) by, for example, the processor (for example, the AP 3910). At least some of the program module 4010 may include, for example, a module, program, routine, sets of instructions, process, or the like for performing one or more functions.

The term "module" used in the present disclosure may refer to, for example, a unit including one or more combinations of hardware, software, and firmware. The "module" may be interchangeable with a term, such as a unit, a logic, a logical block, a component, or a circuit. The "module" may be the smallest unit of an integrated component or a part thereof. The "module" may be a minimum unit for performing one or more functions or a part thereof. The "module" may be mechanically or electronically implemented. For example, the "module" according to the present disclosure may include at least one of an application-specific integrated circuit (ASIC) chip, a field-programmable gate arrays (FPGA), and a programmable-logic device for performing operations which has been known or are to be developed hereinafter.

According to various embodiments of the present disclosure, at least some of the devices (for example, modules or functions thereof) or the method (for example, operations) according to the present disclosure may be implemented by a command stored in a non-transitory computer-readable storage medium in a programming module form. When the command is executed by one or more processors (for example, the processor 120), the one or more processors may execute a function corresponding to the command. The non-transitory computer-readable storage medium may be, for example, the memory 130.

The non-transitory computer readable recoding medium may include a hard disk, a floppy disk, magnetic media (e.g., a magnetic tape), optical media (e.g., a compact disc Read Only Memory (CD-ROM) and a DVD), magneto-optical media (e.g., a floptical disk), a hardware device (e.g., a read only memory (ROM), a random access memory (RAM), a flash memory), and the like. In addition, the program instructions may include high class language codes, which can be executed in a computer by using an interpreter, as well as machine codes made by a compiler. Any of the hardware devices as described above may be configured to work as one or more software modules in order to perform the operations according to various embodiments of the present disclosure, and vice versa.

Any of the modules or programming modules according to various embodiments of the present disclosure may include at least one of the above described elements, exclude some of the elements, or further include other additional elements. The operations performed by the modules, programming module, or other elements according to various embodiments of the present disclosure may be executed in a sequential, parallel, repetitive, or heuristic manner. Further, some operations may be executed according to another order or may be omitted, or other operations may be added.

According to various embodiments of the present disclosure, in a storage medium that stores instructions, the instructions may be configured to cause at least one processor to perform at least one operation when executed by the at least one processor, and the at least one operation may include receiving information on at least one neighboring apparatus related to the electronic apparatus; receiving at least one beacon signal from at least one beacon apparatus; and controlling a service related to the beacon signal on the basis of the information on the at least one neighboring apparatus.

While the present disclosure has been shown and described with reference to various embodiments thereof, it will be understood by those skilled in the art that various changes in form and details may be made therein without departing from the the scope of the present disclosure as defined by the appended claims.

## Claims

1. A method for short-range communication in an electronic apparatus, the method comprising:
receiving (1020) display information of at least one neighboring apparatus related to the electronic apparatus, wherein the display information includes a size or a resolution of a display in a first neighboring apparatus;
receiving (1030) a beacon signal from at least one beacon apparatus;
transmitting (1040), to a server, a request message for a service, wherein the request message includes information related to the beacon signal and the display information;
receiving (1050), from the server, a service including displaying a screen of which a size or a resolution is processed based on the display information included in the request message; and
controlling (1060) the first neighboring apparatus to display the screen based on the received service.

2. The method as claimed in claim 1, further comprising:
sending, to a server, a request for the service related to the beacon signal; and
controlling the at least one neighboring apparatus by using the service related to the beacon signal which is received from the server in response to the request.

3. The method as claimed in claim 1, further comprising:
transmitting, to a server, communication information on the at least one neighboring apparatus, and
receiving, from the server, a service in a frequency band corresponding to the communication information.

4. The method as claimed in claim 1, further comprising determining whether a request for the service related to the beacon signal is sent to a server, based on service-available information on the at least one neighboring apparatus when the service-available information is received.

5. The method as claimed in claim 4, further comprising:
transmitting, to a server, the service-available time information on the at least one neighboring apparatus, and
receiving, from the server, the service related to the beacon signal which corresponds to the service-available time information.

6. The method as claimed in claim 1, further comprising:
transmitting, to a server, information on at least one sensor of the at least one neighboring apparatus, and
receiving, from the server, information for controlling the at least one neighboring apparatus, based on data from the at least one sensor.

7. The method as claimed in claim 1, further comprising:
transmitting, to a server, information on a network including the electronic apparatus, and
receiving, from the server, a service related to at least one additional electronic apparatus included in the network.

8. The method as claimed in claim 1, further comprising:
transmitting, to a server, information on at least one neighboring apparatus previously connected to the electronic apparatus, and
receiving, from the server, a service related to the previously-connected at least one neighboring apparatus.

9. The method as claimed in claim 1, further comprising receiving, from a server, security information for communicating with the server and the at least one neighboring apparatus.

10. An electronic apparatus comprising:
a communication module configured to receive (1020) display information on at least one neighboring apparatus related to the electronic apparatus, wherein the display information includes a size or a resolution of a display in a first neighboring apparatus; and
a processor configured to:
control the communication module to receive (1030) a beacon signal from at least one beacon apparatus through the communication module;
control the communication module to transmit (1040), to a server, a request message for a service, wherein the request message includes information related to the beacon signal and the display information;
control the communication module to receive (1050), from the server, a service including displaying a screen of which a size or a resolution is processed based on the display information included in the request message; and
control (1060) the first neighboring apparatus to display the screen based on the received service.

11. The electronic apparatus of claim 10 adapted to perform the method of any one of claims 2 to 9.

## Patentansprüche

1. Ein Verfahren zur Kurzstreckenkommunikation in einer elektronischen Vorrichtung, wobei das Verfahren Folgendes umfasst:
Empfangen (1020) von Anzeigeinformationen zu mindestens einer Nachbarvorrichtung, die mit der elektronischen Vorrichtung verknüpft ist, wobei die Anzeigeinformationen eine Größe oder eine Auflösung einer Anzeige in einer ersten Nachbarvorrichtung umfassen;
Empfangen (1030) eines Beacon-Signals von mindestens einer Beacon-Vorrichtung;
Übertragen (1040) einer Dienstanforderungsnachricht an einen Server, wobei die Anforderungsnachricht Informationen im Zusammenhang mit dem Beacon-Signal und den Anzeigeinformationen enthält;
Empfangen (1050) eines Dienstes von dem Server einschließlich der Anzeige eines Bildschirms, von dem eine Größe oder eine Auflösung basierend auf den in der Anforderungsnachricht enthaltenen Anzeigeinformationen verarbeitet wird; und
Steuern (1060) der ersten Nachbarvorrichtung, damit diese den Bildschirm basierend auf dem empfangenen Dienst anzeigt.

2. Das Verfahren nach Anspruch 1, wobei dieses weiter Folgendes umfasst:
Senden einer Anforderung eines Dienstes, der mit dem Beacon-Signal verknüpft ist, an einen Server; und
Steuern der mindestens einen Nachbarvorrichtung, indem der mit dem Beacon-Signal verknüpfte Dienst verwendet wird, der infolge der Anforderung von dem Server empfangen wurde.

3. Das Verfahren nach Anspruch 1, wobei dieses weiter Folgendes umfasst:
Übertragen von Kommunikationsinformationen über die mindestens eine Nachbarvorrichtung an einen Server, und
Empfangen eines Dienstes in einem Frequenzband entsprechend den Kommunikationsinformationen von dem Server.

4. Das Verfahren nach Anspruch 1, das weiter das Ermitteln umfasst, ob eine Anforderung des Dienstes, der mit dem Beacon-Signal verknüpft ist, an einen Server gesendet wurde, wobei dies basierend auf den Dienstverfügbarkeitsinformationen auf der mindestens einen Nachbarvorrichtung erfolgt, wenn die Dienstverfügbarkeitsinformationen empfangen werden.

5. Das Verfahren nach Anspruch 4, wobei dieses weiter Folgendes umfasst:
Übertragen der Zeitinformationen zur Dienstverfügbarkeit auf der mindestens einen Nachbarvorrichtung an einen Server, und
Empfangen des mit dem Beacon-Signal verknüpften Dienstes, der den Zeitinformationen zur Dienstverfügbarkeit entspricht, von dem Server.

6. Das Verfahren nach Anspruch 1, wobei dieses weiter Folgendes umfasst:
Übertragen von Informationen zu mindestens einem Sensor der mindestens einen Nachbarvorrichtung an einen Server, und
Empfangen von Informationen von dem Server zum Steuern der mindestens einen Nachbarvorrichtung basierend auf Daten von dem mindestens einen Sensor.

7. Das Verfahren nach Anspruch 1, wobei dieses weiter Folgendes umfasst:
Übertragen von Informationen zu einem Netzwerk, das die elektronische Vorrichtung beinhaltet, an einen Server, und
Empfangen eines Dienstes von dem Server, wobei der Dienst mit mindestens einer weiteren elektronischen Vorrichtung innerhalb des Netzwerks verknüpft ist.

8. Das Verfahren nach Anspruch 1, wobei dieses weiter Folgendes umfasst:
Übertragen von Informationen zu mindestens einer Nachbarvorrichtung, die zuvor mit der elektronischen Vorrichtung verbunden war, an einen Server, und
Empfangen eines Dienstes, der mit der zuvor verbundenen mindestens einen Nachbarvorrichtung verknüpft ist, von dem Server.

9. Das Verfahren nach Anspruch 1, das weiter umfasst, dass Sicherheitsinformationen zur Kommunikation mit einem Server und der mindestens einen Nachbarvorrichtung von dem Server empfangen werden.

10. Eine elektronische Vorrichtung, die Folgendes umfasst:
ein Kommunikationsmodul, das eingerichtet ist, um Anzeigeinformationen zu mindestens einer Nachbarvorrichtung zu empfangen (1020), die mit der elektronischen Vorrichtung verknüpft ist, wobei die Anzeigeinformationen eine Größe oder eine Auflösung einer Anzeige in einer ersten Nachbarvorrichtung umfassen; und
eine Verarbeitungseinrichtung, die für folgende Zwecke eingerichtet ist:
Steuern des Kommunikationsmoduls, damit dieses ein Beacon-Signal von mindestens einer Beacon-Vorrichtung über das Kommunikationsmodul empfängt (1030);
Steuern des Kommunikationsmoduls, damit dieses eine Dienstanforderungsnachricht an einen Server überträgt (1040), wobei die Anforderungsnachricht Informationen im Zusammenhang mit dem Beacon-Signal und den Anzeigeinformationen enthält;
Steuern des Kommunikationsmoduls, damit dieses einen Dienst von dem Server einschließlich der Anzeige eines Bildschirms empfängt (1050), von dem eine Größe oder eine Auflösung basierend auf den in der Anforderungsnachricht enthaltenen Anzeigeinformationen verarbeitet wird; und
Steuern (1060) der ersten Nachbarvorrichtung, damit diese den Bildschirm basierend auf dem empfangenen Dienst anzeigt.

11. Die elektronische Vorrichtung nach Anspruch 10, die dafür ausgelegt ist, das Verfahren nach einem der Ansprüche 2 bis 9 durchzuführen.

## Revendications

1. Un procédé de communication à courte portée dans un appareil électronique, le procédé comprenant :
la réception (1020) d'informations d'affichage d'au moins un appareil voisin relié à l'appareil électronique, où les informations d'affichage comprennent une taille ou une résolution d'un dispositif d'affichage dans un premier appareil voisin,
la réception (1030) d'un signal de balise à partir d'au moins un appareil à balise,
la transmission (1040), à un serveur, d'un message de demande pour un service, où le message de demande contient des informations relatives au signal de balise et les informations d'affichage,
la réception (1050), à partir du serveur, d'un service comprenant l'affichage d'un écran dont une taille ou une résolution est traitée en fonction des informations d'affichage contenues dans le message de demande, et
la commande (1060) du premier appareil voisin de façon à afficher l'écran en fonction du service reçu.

2. Le procédé selon la Revendication 1, comprenant en outre :
l'envoi, à un serveur, d'une demande pour le service relatif au signal de balise, et
la commande du au moins un appareil voisin au moyen du service relatif au signal de balise qui est reçu à partir du serveur en réponse à la demande.

3. Le procédé selon la Revendication 1, comprenant en outre :
la transmission, à un serveur, d'informations de communication relatives au au moins un appareil voisin, et
la réception, à partir du serveur, d'un service dans une bande de fréquences correspondant aux informations de communication.

4. Le procédé selon la Revendication 1, comprenant en outre la détermination si une demande pour le service relatif au signal de balise est envoyée à un serveur, en fonction d'informations de disponibilité de service relatives au au moins un appareil voisin lorsque les informations de disponibilité de service sont reçues.

5. Le procédé selon la Revendication 4, comprenant en outre :
la transmission, à un serveur, des informations de durée de disponibilité de service relatives au au moins un appareil voisin, et
la réception, à partir du serveur, du service relatif au signal de balise qui correspond aux informations de durée de disponibilité de service.

6. Le procédé selon la Revendication 1, comprenant en outre :
la transmission, à un serveur, d'informations relatives à au moins un capteur du au moins un appareil voisin, et
la réception, à partir du serveur, d'information destinées à la commande du au moins un appareil voisin en fonction de données provenant du au moins un capteur.

7. Le procédé selon la Revendication 1, comprenant en outre :
la transmission, à un serveur, d'informations relatives à un réseau comprenant l'appareil électronique, et
la réception, à partir du serveur, d'un service relatif à au moins un appareil électronique additionnel inclus dans le réseau.

8. Le procédé selon la Revendication 1, comprenant en outre :
la transmission, à un serveur, d'informations relatives à au moins un appareil voisin antérieurement raccordé à l'appareil électronique, et
la réception, à partir du serveur, d'un service relatif au au moins un appareil voisin antérieurement raccordé.

9. Le procédé selon la Revendication 1, comprenant en outre la réception, à partir d'un serveur, d'informations de sécurité relatives à une communication avec le serveur et le au moins un appareil voisin.

10. Un appareil électronique comprenant :
un module de communication configuré de façon à recevoir (1020) des informations d'affichage relatives à au moins un appareil voisin relié à l'appareil électronique, où les informations d'affichage comprennent une taille ou une résolution d'un dispositif d'affichage dans un premier appareil voisin, et
un processeur configuré de façon à :
commander le module de communication de façon à recevoir (1030) un signal de balise à partir d'au moins un appareil à balise par l'intermédiaire du module de communication,
commander le module de communication de façon à transmettre (1040), à un serveur, un message de demande pour un service, où le message de demande contient des informations relatives au signal de balise et les informations d'affichage,
commander le module de communication de façon à recevoir (1050), à partir du serveur, un service comprenant l'affichage d'un écran dont une taille ou une résolution est traitée en fonction des informations d'affichage contenues dans le message de demande, et
commander (1060) le premier appareil voisin de façon à afficher l'écran en fonction du service reçu.

11. L'appareil électronique selon la Revendication 10 adapté de façon à exécuter le procédé selon l'une quelconque des Revendications 2 à 9.
